# EUROPEAN PATENT SPECIFICATION

(11) **EP 0 583 096 B1**
(45) Date of publication and mention of the grant of the patent: **18.02.1998**
(21) Application number: 93305802.6
(22) Date of filing: 22.07.1993
(51) Int. Cl.: C09D 11/00

(54) **Ink-jet recording method and apparatus**
Verfahren zur Tintenstrahlaufzeichnung und Tintenstrahlaufzeichnungsgerät
Méthode et dispositif d'enregistrement à jet d'encre

(30) Priority: 24.07.1992 JP 198734/92; 02.07.1993 JP 164845/93
(43) Date of publication of application: 16.02.1994
(73) Proprietor: CANON KABUSHIKI KAISHA, Tokyo (JP)
(72) Inventor: Uetuki, Masaya, c/o Canon Kabushiki Kaisha, Ohta-ku, Tokyo (JP); Hirabayashi, Hiromitsu, c/o Canon Kabushiki Kaisha, Ohta-ku, Tokyo (JP); Nagoshi, Shigeyasu, c/o Canon Kabushiki Kaisha, Ohta-ku, Tokyo (JP); Koitabashi, Noribumi, c/o Canon Kabushiki Kaisha, Ohta-ku, Tokyo (JP); Akiyama, Yuji, c/o Canon Kabushiki Kaisha, Ohta-ku, Tokyo (JP); Sugimoto, Hitoshi, c/o Canon Kabushiki Kaisha, Ohta-ku, Tokyo (JP); Matsubara, Miyuki, c/o Canon Kabushiki Kaisha, Ohta-ku, Tokyo (JP); Gotoh, Fumihiro, c/o Canon Kabushiki Kaisha, Ohta-ku, Tokyo (JP)
(74) Representative: Beresford, Keith Denis Lewis

(56) References cited:
- EP-A- 0 272 896
- US-A- 5 116 409
- PATENT ABSTRACTS OF JAPAN & JP-A-56 049 771 (SEIKO EPSON CORP.) 6 May 1981
- DATABASE WPI Week 8206, Derwent Publications Ltd., London, GB; AN 82-10725E & JP-A-56 167 775 (PILOT INK KK) 23 December 1981

## Description

The present invention relates to a method for conducting ink-jet printing on a recording medium, which is a medium to be applied with deposits of a liquid substance such as an ink, a solution of a solid ink or a toner obtained by dissolving powder, for example, paper, fabric or a special sheet, or on a decorating medium itself intended for simple printing, and an apparatus for use in such a method. The invention is suitable for use in recording devices such as copying machines and facsimile telegraphs, communication devices, business machines, combination devices, printers, etc.

### Related Background Art

Printers of thermal transfer, LBP, dot impact, ink-jet and other systems have been used as output devices for personal computer terminals, copying machines, facsimile telegraphs, etc.

Of these, the ink-jet systems attract attention as a printing system excellent in stillness. Of the ink-jet systems, a system making use of bubbling of a liquid by heating has excellent features such as easiness of achieving high density, excellent stillness, easiness of providing color images and fitness for high-speed printing and focuses attention as a printing method which provides high-quality images and is cheap.

On the other hand, an ink-jet recording method which is of an old ink-jet system and makes use of a piezoelectric element comprises conducting recording by using a drive voltage of 40 V or higher to eject an ink by means of an On-Demand or continuous system. The piezoelectric element is usually driven by applying a drive voltage capable of reliably ejecting the ink even when an environmental variation occurs. Japanese Patent Publication No. 58-6752, which is a known patent document, discloses this system in its examples and inks of different colors which each contain 0.0001 to 10 % by weight of an ethylene oxide adduct. In this publication, an ink containing a surfactant is compared with another ink containing no surfactant, and ranked in fixability and water resistance as being relatively excellent. With respect to ink ejection in both continuous drive and intermittent drive, the ink is also ranked as being stably ejected. In this publication, whether these inks can be ejected according to a first drive signal after left over for 3 months in a recording apparatus is judged, and the surfactant-containing ink is disclosed as being able to be ejected smoothly.

In "Entire Revision, New Primer of Surfactants" published in 1981 (October 1) by Sanyo Chemical Industries, Ltd., it is disclosed that when a surfactant is contained in a liquid, it is a common knowledge to contain the surfactant in an amount not less than the critical micelle concentration (c.m.c) of the surfactant in the liquid in order to sufficiently achieve the effect of the surfactant. U.S. Patent Nos. 5,106,416 and 5,116,409 feature that a surfactant is contained in inks in an amount not less than its critical micelle concentration (c.m.c.) in the inks. These publications discloses that the respective inventions have an effect of preventing the bleeding of the inks, and clearly describe the critical micelle concentration (c.m.c) of the surfactant in water as having no meaning. On the contrary, Japanese Patent Application Laid-Open No. 56-49771 discloses inks in which a surfactant is contained in an amount not more than the critical micelle concentration (c.m.c) of the surfactant in water, and says that the inks have an effect of preventing the clogging of a nozzle. Japanese Patent Application Laid-Open No. 1-182384 discloses an invention of ink in which a low-boiling, low-viscosity polar solvent is added to an ink containing 1 to 10 % of a surfactant like those disclosed in the above-mentioned Japanese Patent Publication No. 58-6752 to make the ink usable. However, the invention only takes account of feathering of ink on paper.

The contents disclosed in the above prior art are illusive as if a final image itself could be obtained with high quality. However, their detailed investigation has revealed that their technical contents are only low level because first of all, they pay no attention to the structural change in ink droplets ejected from an ink-jet recording head, and second they make no allowance for the correlation among the change of state of ink in the ink-jet recording head, the production of minute ink droplets other than main ink droplets, which are caused by separation of flying ink droplets and called satellites and microdots, and the behavior of ink toward a recording medium.

The present inventors have carried out research and development with a major subject that the above correlation not recognized in the above-mentioned prior art is satisfied, and have led to the finding that it is most preferable to investigate the qualitative critical micelle concentration (c.m.c) of a surfactant in an ink, which is an feature in the present invention, and the critical micelle concentration (c.m.c) of a surfactant in purified water paying attention to minute ink droplets other than main ink droplets.

Brief description is made for the sake of facilitating the understanding of the present invention. When droplets of inks of different colors are divided until they reach an recording medium even if the inks can be ejected from an ink-jet recording head, boundaries themselves between the inks vary, so that image quality is deteriorated due to the minute droplets dispersed even if the inks have good resistance to feathering on the recording medium. It is understood from the finding of such a phenomenon that the point of the present invention aimed at predominates over the prior art.

In addition, since the conventional ink-jet recording methods and apparatus have been used under normal environmental conditions of from 20°C to 25°C, judgment criterion of effects are scarcely affected by the environmental conditions. In recent years, it has been adopted to control the temperature of an ink-jet recording head in order to stabilize the properties of the ink-jet recording head. At this time, a difference between the environmental temperature and the temperature inside the ink-jet recording head may affect ink droplets in some cases to an extent that their flying condition is influenced. It is also a considerable item that the above publications do not take such environmental problems into consideration. The present inventors also have found that if stability and reliability are more required from this point of view, then upon the determination of a relationship between the concentrations of an surfactant in inks and purified water and the surface tensions thereof, their critical micelle concentrations (c.m.c.) and curves thereof can be obtained more precisely so long as the determination is conducted while adjusting the inks (and also preferably purified water) to a preset temperature at which an ink-jet recording head used in recording is controlled, and practical recording with inks can be conducted with more precision and long-term stability as to properties.

It has also been found that although an ink containing a surfactant in an amount not less than the qualitative critical micelle concentration (c.m.c.) of the surfactant in the ink can prevent the occurrence of bleeding at boundaries between inks of different colors (hereinafter referred to as "color bleeding") on commercially-available paper unless it is ejected through a head, and has an effect of preventing the occurrence of uneven densities or partial blanks (a phenomenon making a white appearance) at areas completely spread with ink (hereinafter referred to as "solid-printed areas"), which is caused by penetration irregularity depending upon the recording medium used, and an effect of being capable of forming dots near a circle, the its viscosity increase caused by evaporation under low-humidity environment due to temperature rise become remarkable, and recovery property of ejection is hence deteriorated. In order to prevent this occurrence, recovery operation has been often conducted. However, such operation has been attended by evils of reduction in printing time and increase in amount of ink consumed to an extent beyond all expectations. In particular, a noticeable problem on the ink containing the surfactant in the amount not less than the critical micelle concentration (c.m.c.) has been that the surface tension of the ink lowers up to the utmost limit, and its viscosity increases sharply. Therefore, after its ejection from a head, microdots following main droplets have become uneven, and the proportion of their generation has increased sharply, resulting in many evils such that quality in characters recorded and the linearity of rules are deteriorated, and changes in color tone occur. In such an ink, it has been impossible to utilize the effects brought about by the ink itself for improving images.

### SUMMARY OF THE INVENTION

It is a principal object of the present invention to provide an ink-jet recording method, in which the shape of final dots upon ejecting inks through an ink-jet recording head to conduct recording (including dyeing) with the inks on a recording medium is stabilized, whereby the effect of an surfactant (preferably, of a nonionic type) can be caused to act so as to permit the prevention of feathering between the recording medium and the inks or occurrence of color irregularity at boundaries between different colors, and an apparatus for use in such a method.

Another object of the present invention is to provide an ink-jet recording method which permits the provision of an image excellent in quality and the achievement of high reliability by taking account of environmental conditions which have not been investigated in the conventional surfactant-containing inks, and an apparatus for use in such a method.

A further object of the present invention is to provide an ink-jet recording method, in which the properties of a surfactant-containing ink in an ink-jet recording head are caused to greatly differ from those of the ink on a recording medium to effectively use the functional effect of the ink itself, thereby permitting the enhancement of image quality, and an apparatus for use in such a method.

According to the present invention, there are thus provided an epochal technique which renovates the conventional technical reading and is directed to an ink-jet recording method, which comprises supplying an ink-jet recording head with a water-based ink containing a surfactant in a predetermined amount lower than the critical micelle concentration of the surfactant in the water-based ink (c.m.c in ink), but higher than the critical micelle concentration of the surfactant in purified water (c.m.c. in purified water), thereby conducting recording with the ink on a recording medium, and related techniques thereof.

According to the present invention, there is also provided an ink-jet recording method, which comprises supplying an ink-jet recording head with a water-based ink containing a surfactant in a predetermined amount lower than and near to the critical micelle concentration of the surfactant in the water-based ink (c.m.c in ink), but higher than the critical micelle concentration of the surfactant in purified water (c.m.c. in purified water), thereby conducting recording with the ink on a recording medium.

According to the present invention, there is further provided an ink-jet recording method, which comprises supplying an ink-jet recording head with a water-based ink containing a surfactant in a predetermined amount lower than and near to the critical micelle concentration of the surfactant in the water-based ink (c.m.c in ink), but higher than the critical micelle concentration of the surfactant in purified water (c.m.c. in purified water) and controlling the concentration of the surfactant in the ink on a recording medium so as to become not less than the critical micelle concentration of the surfactant in the ink (c.m.c. in ink), thereby conducting recording with the ink on the recording medium.

According to the present invention, there is still further provided an ink-jet recording apparatus, comprising an ink-jet recording head charged with a water-based ink containing a surfactant in a predetermined amount lower than and near to the critical micelle concentration of the surfactant in the water-based ink (c.m.c in ink), but higher than the critical micelle concentration of the surfactant in purified water (c.m.c. in purified water) and an accelerating means for controlling the concentration of the surfactant in the ink on a recording medium so as to become not less than the critical micelle concentration of the surfactant in the ink (c.m.c. in ink), said apparatus conducting recording with the water-based ink on the recording medium.

According to the present invention, there is yet still further provided an ink-jet recording method, which comprises supplying an ink-jet recording head with a water-based ink containing a surfactant in a predetermined amount lower than the critical micelle concentration of the surfactant in the water-based ink (c.m.c in ink), but higher than the critical micelle concentration of the surfactant in purified water (c.m.c. in purified water) under conditions that the water-based ink satisfies a surface tension exceeding 30 dyne/cm as used, thereby conducting recording with the ink on the recording medium.

According to the present invention, there is yet still further provided an ink-jet printing method making use of an ink-jet recording head temperature-controlled under temperature setting conditions of T°C, which comprises supplying an ink-jet recording head with a water-based ink containing a surfactant in a predetermined amount lower than the critical micelle concentration of the surfactant in the water-based ink (c.m.c in ink) on a relational curve between the surface tension and concentration of the surfactant in the water-based ink under the temperature setting conditions of T°C, but higher than the critical micelle concentration of the surfactant in purified water (c.m.c. in purified water) on a relational curve between the surface tension and concentration of the surfactant in the purified water under the temperature setting conditions of T°C to conduct printing.

The present invention can reliably achieve the effects brought about by the above-described principal techniques, i.e., the stabilization of jetting condition of ink droplets ejected, and the improvement of print quality owing to the prevention of feathering and the stabilization of shape of a single dot on the recording medium, fully satisfies the well-balanced relation between ejection recovery property and ejection property at high frequency, and also has the following effects. The surface tension of the ink exceeding 30 dyne/cm under the temperature setting conditions of T°C can make the behavior of the ink in the head as used more functional as to refilling and ejection. The predetermined amount of the surfactant within a range not more than [the critical micelle concentration (c.m.c in ink) + the critical micelle concentration (c.m.c in purified water)]/2 can suppress the variation of the viscosity of the ink to an extremely slight extent, so that the effects of the surfactant are still more brought out, and variations in ejection condition of ink droplets can be substantially lost. In particular, the determination of the concentration of the surfactant on the relational curve between the surface tension and concentration of the surfactant in the water-based ink under the temperature setting conditions of T°C makes the surfactant a state capable of effectively functioning to variations in the environment used.

In any event, it is desirable from the viewpoint of the acceleration of penetration that the concentration of the surfactant is as high as possible. However, it is important in practical use that the concentration of the surfactant in the ink is higher than its critical micelle concentration in purified water (c.m.c. in purified water) from the view points of the prevention of feathering or bleeding and the maintenance of even solid printing, and is lower than its critical micelle concentration in the ink (c.m.c. in ink) from the viewpoint of improvement in ejection property and quality of a single dot, and reduction in load of recovery operation.

In a color ink-jet recording method which satisfies the above-described principal features and can conduct recording with plural inks of different colors in order on a recording medium, the fact that all the plural inks used contain the surfactant in the predetermined amount has an effects of producing a hue in a desired state because the surfactant contained in each ink does not migrate to another ink not only at boundaries between the inks of different colors, but also in the case where the inks are overlapped to each other. Other features of the present invention will become understood from the following description.

### BRIEF DESCRIPTION OF THE DRAWINGS

Fig. 1 is a graph illustrating a relationship between the amount (concentration) of a surfactant added and the surface tension of an ink containing the surfactant in such an amount.

Fig. 2 is a graph illustrating a relationship between feathering of an ink on a recording medium and the viscosity of the ink itself in a recording head versus the concentration of a surfactant.

Figs. 3A through 3D respectively illustrate recording conditions within a recording width A in one scanning of a recording head.

Fig. 4 schematically illustrates a divided paper-feed and divided printing system (fine mode) by which the thinned-out pattern in Fig. 3D is executed.

Fig. 5 is an explanatory view illustrating an arrangement of a printer.

Figs. 6A and 6B are a schematic drawing of a multi-head and an exploded view of the multi-head, respectively.

Fig. 7 illustrates a rear face of a top of the multi-head.

Fig. 8 is a graph illustrating a condition of changes in concentration of a surfactant.

Fig. 9 is a graph illustrating a relationship between the concentration of a surfactant and a refilling frequency.

Fig. 10 is a schematic drawing illustrating an exemplary recording apparatus used in the practice of the present invention.

Fig. 11 is a schematic drawing illustrating another exemplary recording apparatus used in the practice of the present invention.

### DETAILED DESCRIPTION OF THE PREFERRED EMBODIMENTS

The basic principle of the present invention will hereinafter be described.

First of all, the determination of the critical micelle concentration of a surfactant in ink is conducted. The judgment of the critical micelle concentration was conducted in the following manner. Inks in which the compositions were the same as each other except that only the concentration of a surfactant was changed were prepared to measure surface tensions of the inks by a surface tension meter (Surface Tension Meter CBVP-A3, trade name, manufactured by Kyowa Kaimen Kagaku K.K.). The minimum concentration in which if the concentration of the surfactant was further increased, the surface tension was lowered no longer was regarded as a critical micelle concentration. The same measurement was also conducted in purified water to determine the critical micelle concentration in purified water.

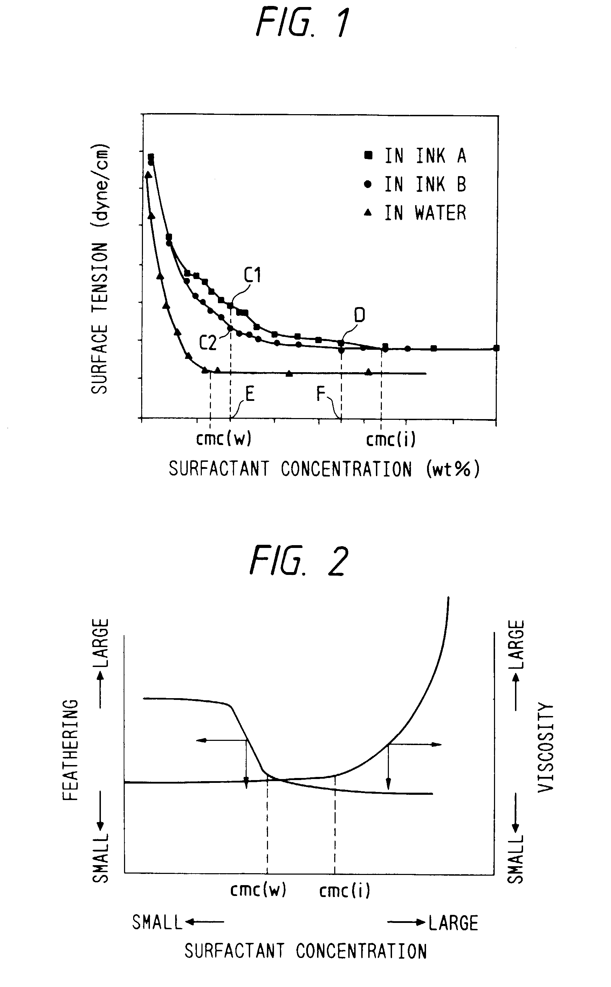

The measurement results of the critical micelle concentrations determined in terms of surface tension are illustrated in Fig. 1. As shown in Fig. 1, a slight difference arises between the critical micelle concentration c.m.c.(w) (w) determined in the purified water and the critical micelle concentration c.m.c.(i) determined in the ink compositions. The cause that the difference arises between the critical micelle concentration in the purified water and the critical micelle concentration in the inks of the surfactant is considered to be attributable to the following mechanism.

A coloring agent such as a dye or pigment is added to an ink for producing a color. Various additives are also added for improvement of shelf life, prevention of sticking, and the like.

Most of these dye and additives diffuse in the solution. However, the remainder exists in a gas-liquid interface and a gas-solid interface in a certain probability. Therefore, in the ink composition, the gas-liquid interface and the gas-solid interface are becoming an uneven state compared with those in the purified water. In the purified water, the surfactant reaches its critical micelle concentration in a lower concentration than in the ink composition. However, the surface tension of the ink composition continues to lower until the surfactant in the ink composition orients to the surface of the solution and then fully orients to the surfaces of the dye and additives present in these interfaces.

A part of the surfactant is adsorbed on the dye, additives and the like present in the solution in the same manner as in the interfaces and consumed.

The critical micelle concentration of the surfactant in the ink composition is considered to be higher than that in the purified water because the surfactant is consumed to dissolve the unevenness of the interfaces due to the presence of the dye and additives in the interfaces or the solution as described above.

In Fig. 1, however, the extreme reduction in surface tension in the case where the concentration of the surfactant is low occurs even in the ink composition as with the case of the purified water. This indicates that the surfactant added sufficiently fulfills its function that it orients to the gas-liquid interface to reduce the surface tension though there is a case where it is dissolved in the ink solution to orient to the dye or where it orients to the dye and additives present in the surface to be consumed. Namely, it is understood that in the region where the concentration of the surfactant is low, the surfactant in the gas-liquid interface reduces the surface tension by the same phenomenon as in the purified water.

As described above, the present inventors have come to a conclusion that the surfactant added to the ink for the improvement of penetrating power can exhibit sufficient penetration performance so long as it is added in an amount higher than its critical micelle concentration in water.

The influence of the concentration of the surfactant on print quality is then conceptually illustrated in Fig. 2. In the drawing, there is illustrated "boundary bleeding" which makes a greatest difference among properties as to the print quality. As described above, it is considered that the surfactant orients to the interface of the ink surface even in the ink composition so long as its concentration is higher than the critical micelle concentration in purified water. With respect to the prevention of the bleeding, therefore, a sufficient effect can be achieved so long as the concentration of the surfactant is higher than the point c.m.c.(w) in the drawing.

Besides, as the concentration (% by weight) of the surfactant in the ink is increased, the viscosity of the ink is gradually increased. In particular, the increase is remarkable at the point of the critical micelle concentration in the ink, c.m.c.(i) or higher. Accordingly, it is supported that the phenomenon described in the above Related Background Art notably occurs at the point of the critical micelle concentration in the ink, c.m.c.(i) or higher. As described above, the viscosity of the ink at the point of the critical micelle concentration in the ink, c.m.c.(i) or higher deteriorates the condition of ink droplets ejected, and hence not only deteriorates the quality of image, but also greatly affects the recovery property of an ink-jet recording head.

In the concentration of surfactant-surface tension curve shown in Fig. 1, a point, c.m.c.(i) at which the amount of the surfactant in the water-based ink containing the surfactant reaches the critical micelle concentration (c.m.c. in ink) is regarded as being 3.2 % by weight and 29 dyne/cm, and a point, c.m.c.(w) at which the amount of the surfactant in purified water reaches the critical micelle concentration (c.m.c. in purified water) is regarded as being 0.7 % by weight and 27 dyne/cm. At this time, the surface tensions at respective points C1, C2 in the inks A, B containing the surfactant in a concentration of E (1 % by weight) are both not lower than 30 dyne/cm. As understood from the drawing, the concentration of E is within a range not more than [the critical micelle concentration (c.m.c in ink) + the critical micelle concentration (c.m.c in purified water)]/2. A color image obtained by using only the inks A, B at the points C1 and C2 is embraced in the preferred embodiments of the present invention as having been apparent from the above description. A point D in the ink A containing the surfactant in a concentration of F in Fig. 1 is near to the critical micelle concentration, c.m.c. (i). Therefore, such a ink can cause a change in property after ejecting it under a recording environment created by a heating means temperature-controlled at 200°C, so that the behavior of the ink can be substantially beyond the critical micelle concentration, c.m.c (i).

The surfactants used in the present invention are not limited specifically, but preferably are those of structural formulae [1] to [4], in which m, n and m + n are preferably each within the range of from 6 to 14, and R has preferably carbon atoms of from 6 to 26.

Structural Formula [1]: R-O-(CH₂CH₂O)ₙ-H

wherein R means an alkyl group, and n stands for an integer, 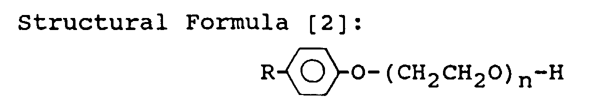 wherein R means an alkyl group, and n stands for an integer, 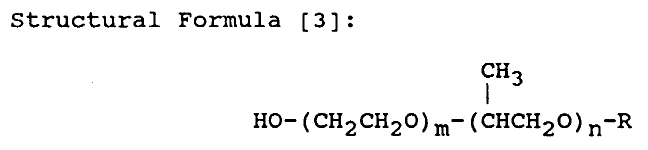 wherein R means hydrogen or an alkyl group, and m and n stand individually for an integer, and 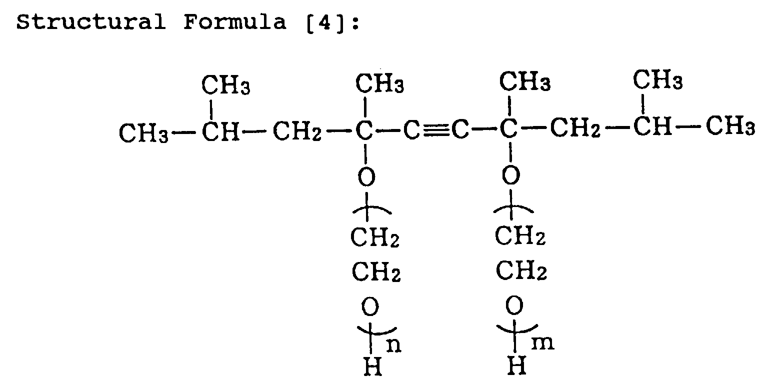 wherein m and n stand individually for an integer.

The present invention will hereinafter be described specifically by the following examples.

In the following, units used in formulations are % by weight unless expressly noted.

### Example 1 and Comparative Examples 1 to 2:

| | Ex. 1 | Comp. Ex. 1 | Comp. Ex. 2 |
|---|---|---|---|
| Solvent: Glycerol | 5.0 | 5.0 | 5.0 |
| Surfactant: Ethylene oxide adduct of acetylene glycol (trade name: Acetylenol EH) | 1.0 | 0.5 | 5.0 |
| Stabilizer: Urea | 5.0 | 5.0 | 5.0 |
| Dye: | | | |
| Black: C.I. Food Black 2 | 4.0 | 4.0 | 4.0 |
| Yellow: C.I. Direct yellow 86 | 2.5 | 2.5 | 2.5 |
| Cyan: C.I. Direct Blue 199 | 3.5 | 3.5 | 3.5 |
| Magenta: C.I. Direct Red 227 | 3.0 | 3.0 | 3.0 |
| Water: | Balance | Balance | Balance |

Four inks of different colors obtained by respectively mixing in accordance with the above formulation were separately stirred for 2 hours at room temperature and then filtered through a membrane filter (Fluoropore Filter, trade name: product of Sumitomo Electric Industries, Ltd.) having a pore size of 0.22 µm to test them. Using the inks, printing was conducted to evaluate the inks about whether resistance to bleeding or feathering was good or not and the tolerance for break time.

The inks according to Example 1 have an ink composition according to the spirit of the present invention, and the concentration of the surfactant is within a range of from not less than its critical micelle concentration in purified water to not more than its critical micelle concentration in the ink composition. The inks according to Comparative Example 1 are inks used as comparative objects for demonstrating the effects of the present invention, and the concentration of the surfactant is not more than its critical micelle concentration in purified water. As with the inks of Comparative Example 1, the inks according to Comparative Example 2 are also inks used as comparative objects for demonstrating the effects of the present invention, and the concentration of the surfactant is not less than its critical micelle concentration in the ink composition.

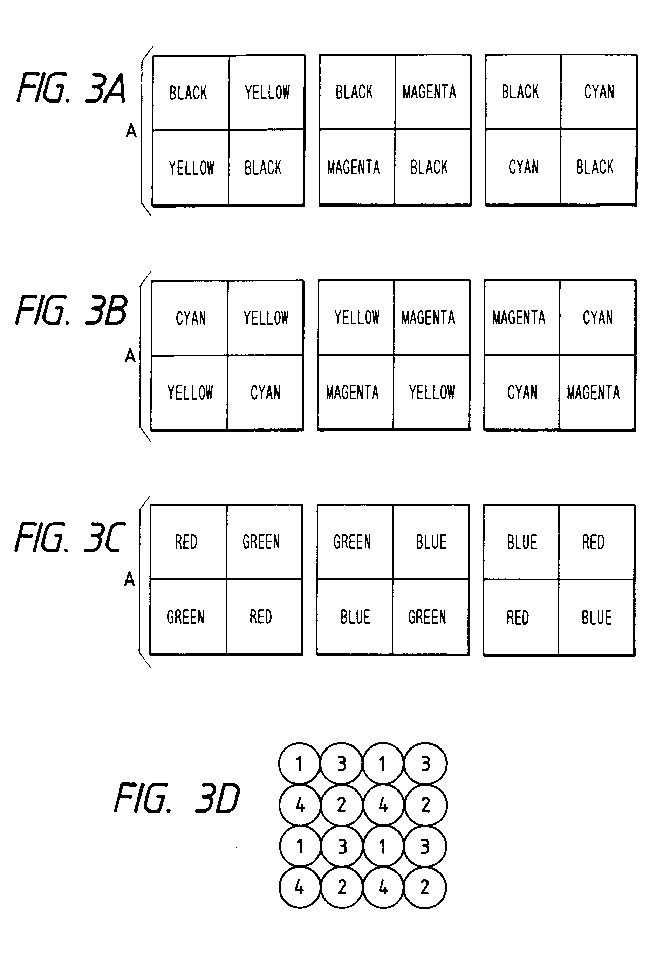

The above-described inks were evaluated in resistance to color bleeding, break time within the range of possibility and the like. The evaluation of print quality and the like was conducted using commercially-available paper for copying (NP Dry Paper, product of Canon Inc.). Printing was carried out by means of a color ink-jet printer (BJC-820J, trade name, manufactured by Canon Inc.), in which an ink is ejected by bubbling due to heating, unless expressly noted.
(1) Dot shape:
   Three hundred dots were continuously printed with each of the above inks so as not to overlap to one another. After the thus-obtained print was dried for 24 hours at room temperature, the number of dots on which undefined or irregular feathering occurred was counted through a microscope to rank the dot shape in terms of percentage in accordance with the following standard:
   A: Not more than 10%;
   B: 11 to 50%;
   C: Not less than 51%.
(2) Evaluation of recovery property in terms of break time within the range of possibility:
   When printing is conducted in practice, all nozzles are not evenly used, but in some cases, a part of the nozzles may be left over for a long period of time without ejecting operation during printing. In such a nozzle in no operation, evaporation of the solvent for an ink from the tip of the nozzle and viscosity increase of the ink take place, so that the nozzle is clogged with the thickened ink, which forms a cause of slippage or faint printing. What break time causes the printing inferiority is difficult to unqualifiedly define because the ejecting pressure, opening area and the like vary with the head. In the case of the same heads, however, there is a marked tendency to depend upon environment and ink used. More specifically, an ink containing a considerable amount of high-viscosity nonvolatile matter tends to sharply thicken and take place ejection failure as a solvent evaporates. It is hence necessary to suppress the use of high-viscosity additives to an amount as little as possible. In general, in order to prevent the printing inferiority as described above, all the nozzles or the nozzle in no operation was subjected to ejecting operation at a fixed time during printing to recover the nozzle. However, such recovery operation must be avoided to the utmost because frequent recovery operation is attended with reduction in printing speed and increase in ink consumption. Therefore, it is necessary to evaluate the combination of an ink and a head, which is in practical use, in required interval of the ejecting operation for recovery.
   Each of the inks was charged in a tank-integrated ink-jet cartridge (BC-01, manufactured by Canon Inc.). The cartridge was caused to fully adapt to low-temperature and low-humidity environment (temperature: 10°C, humidity: 10 %) and then set in a printer to conduct first printing by ejecting the inks through all nozzles. The printing was then suspended for a predetermined period of time to cause the printer to stand by without capping the nozzles. Thereafter, second printing was conducted again. The suspended time was changed to determine the longest break time when visible printing inferiority did not occur by the second printing. The longest break time was used as a time interval at which the recovery operation by ejection had to be conducted, in the evaluation. The recovery property was ranked in accordance with the following standard:
   A: Longer than 60 seconds;
   B: 30 to 60 seconds;
   C: Shorter than 30 seconds.
(3) Resistance to color bleeding:
   Color print samples in which different colors adjoined as illustrated in Figs. 3A through 3C were prepared. In these samples, the region of the width A as shown respectively in the drawings was printed by one scanning to observe whether color bleeding occurred.
   As illustrated in the drawings, colors used were seven colors of black, cyan, magenta, yellow, and red, blue and green which were produced by overlapping any two colors of cyan, magenta and yellow.
   A: No color bleeding was observed at all boundaries between the color prints;
   B: Bleeding was observed at boundaries between red, green and blue prints, to which a greater amount of inks were applied;
   C: Color bleeding was observed at almost all boundaries.
(4) Evenness of solid print:
   A solid-printed area in an ink-jetting density of 100 % was visually observed to rank its color evenness in accordance with the following standard:
   A: The print was even and had no color irregularity;
   B: Color irregularity was remarkable at areas where fibers were dense in paper;
   C: Color irregularity was remarkable throughout the print.

The results of the above-described evaluation are shown in Table 1.

**Table 1**

| Item evaluated | Ex. 1 | Comp. Ex. 1 | Comp. Ex. 2 |
|---|---|---|---|
| (1) Dot shape | A | C | B |
| (2) Break time within the range of possibility | A | A | C |
| (3) Resistance to bleeding | A | C | A |
| (4) Color evenness | A | C | A |

As shown in Table 1, with respect to the resistance to bleeding and color evenness, the inks of Example 1 and Comparative Example 2, in which the surfactant is contained in an amount not less than its critical micelle concentration in purified water, exhibit the effect of preventing the occurrence of bleeding owing to the improvement of penetrability. It is however believed that the print making use of the inks of Comparative Example 2 is somewhat superior in resistance to bleeding to the print making use of the inks of Example 1, and also does so in color evenness. It was however judged that the inks of Example 1 and Comparative Example 2 are identical with each other, from the facts that these inks are markedly improved in resistance to bleeding and color evenness compared with the inks of Comparative Example 1, the difference in such properties therebetween is slight, and the level of Example 1 causes no problem in actual use.

With respect to the shape of a single dot, the inks of Comparative Example 2 is inferior to the inks of Example 1 because the generation of secondary droplets (satellites) which follow the ejection of principal droplets is recognized.

On the other hand, the inks of Comparative Example 1, in which the surfactant is contained only in an amount not more than its critical micelle concentration in purified water, are insufficient in penetrability, so that bleeding remarkably occurs at boundaries between the inks of the different colors.

The inks of Comparative Example 2, in which the surfactant is contained in an amount not less than its critical micelle concentration in the inks, are poor in recovery property. It is hence understood that such inks are deteriorated in ejection property compared with the inks of Example 1 and Comparative Example 1.

As described above, an printing apparatus making use of the inks according to this example provides sufficient image quality and has sufficiently long break time within the range of possibility (good recovery property).

### Example 2 and Comparative Example 3:

This example and subsequent examples have a constitution that when inks containing the surfactant in an amount not more than its critical micelle concentration in the inks are used, the surfactant is used in a concentration extremely near its critical micelle concentration in the inks, whereby the inks are concentrated by evaporation of the solvent, water, etc. during their flying or upon their fixing on the recording medium, and at this time, the concentration of the surfactant in the inks exceeds the critical micelle concentration in the inks. Such a constitution makes it possible to treat the inks in a recording head as inks in which the concentration of the surfactant is not more than its critical micelle concentration in the inks, said concentration being favorable for ejection property. Then, the concentration of the surfactant in the inks become higher than the critical micelle concentration in the inks upon penetration of the inks. Therefore, such inks are recognized to be improved in resistance to bleeding, dot quality and the like.

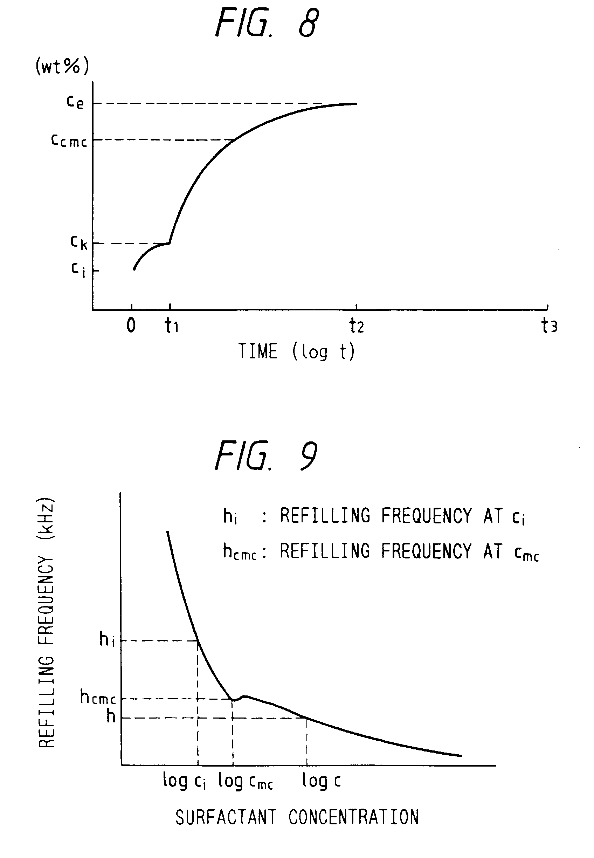

This example will be described with reference to Fig. 8.

In order to facilitate the evaporation of water in each ink upon the start of printing, a head is first temperature-controlled to raise a temperature inside the head to a desired level. The ink ejected in a concentration [Ci] in terms of the surfactant as shown in Fig. 8 is concentrated to a concentration [Ck] in terms of the surfactant as shown in Fig. 8 by the evaporation of water by the time the ink reaches the surface of a printing medium. After reaching the surface of the printing medium, the ink is concentrated by evaporation of water on the surface of the printing medium, so that the concentration of the surfactant finally reaches "critical micelle concentration in ink". At this point, the surface tension of the ink on the surface of the printing medium reaches the minimum value, and its absorbing speed becomes maximum. Thereafter, the concentration of the surfactant reaches the end concentration [Ce], and at substantially the same time, the absorption of the ink droplets into the medium is completed.

The ejection property of the ink in the head is illustrated in Fig. 9. As apparent from this drawing, as the concentration of the surfactant increases from the lower level, the refilling frequency sharply decreases due to the reduction in surface tension and increase in viscosity of the ink. Even when the concentration exceeds "critical micelle concentration in ink", the reduction in refilling frequency is recognized due to the viscosity increase as the concentration of the surfactant increases.

An example in which tests on resistance to bleeding and refilling property were conducted in practice will hereinafter be described. Inks used were those having the following formulation.

| | Ex. 2 | Comp. Ex. 3 |
|---|---|---|
| Solvent: Glycerol | 7.5 | 7.5 |
| Surfactant: Sodium tetradecyl sulfate | 0.055 | 0.065 |
| Stabilizer: Urea | 7.5 | 7.5 |
| Dye: | | |
| Black: C.I. Food Black 2 | 4.0 | 4.0 |
| Yellow: C.I. Direct yellow 86 | 2.5 | 2.5 |
| Cyan: C.I. Direct Blue 199 | 3.5 | 3.5 |
| Magenta: C.I. Direct Red 227 | 3.5 | 3.5 |
| Water: | Balance | Balance |

Four inks of different colors obtained by respectively mixing in accordance with the above formulation were separately stirred for 2 hours at room temperature and then filtered through a membrane filter (Fluoropore Filter, trade name: product of Sumitomo Electric Industries, Ltd.) having a pore size of 0.22 µm to test them. Using the inks, printing was conducted in varied drive frequencies of a head to evaluate the inks about whether resistance to bleeding or feathering was good or not and print quality. The individual properties were ranked in accordance with the standards described in Example 1 except for the following standard on the refilling property.

### Refilling property:

Whether refilling of each ink into a nozzle upon printing was good or not was judged from a state of printing.
A: Printable without problems even in 100 % solid printing;
B: Slippage, blurring, ejection failure and/or the like occurred in 100 % solid printing due to insufficient refilling;
C: Refilling was infeasible in 100 % solid printing, and all nozzles failed to eject ink.

In order to make the effects of this example more clear, inks to which the surfactant was added in an amount not less than its critical micelle concentration in the inks were also mentioned as a comparative example (Comparative Example 3).

The results of the evaluation are shown in Table 2.

As understood from Table 2, the inks of Comparative Example 3 missed refilling when exceeding 5.5 kHz of driving frequency. On the contrary, the inks of Example 2 permitted refilling even in 6.0 kHz of driving frequency. With respect to resistance to bleeding, there was little difference between the inks of Example 2 and Comparative Example 3 because they were sufficient in penetration speed.

In the case of the ink compositions according to Example 2, the critical micelle concentration of the surfactant used in the inks is low, and change in concentration of the surfactant from less than the critical micelle concentration to more than the critical micelle concentration appears very sharply. Therefore, the change in concentration of the surfactant in the ink from less than the critical micelle concentration to more than the critical micelle concentration can be carried out only by the time until the ink reaches the surface of paper, and the evaporation of water on the paper surface. Such inks have an advantage that there is no need for any auxiliary solvent.

### Examples 3 and 3A and Comparative Example 4 :

In the case of Example 3, also, in order to facilitate the evaporation of water and a low-boiling solvent in each ink upon the start of printing as with Example 2, a head is first temperature-controlled to raise a temperature inside the head to a desired level. Thereafter, the evaporation of water is allowed to progress in the same manner as the case of Example 2. However, the surfactant used in this example is high in its critical micelle concentration. In this case, the change in concentration of the surfactant in the ink from less than the critical micelle concentration to more than the critical micelle concentration can not be carried out completely only by the time until the ink reaches the surface of paper, and the evaporation of water on the paper surface. Therefore, isopropyl alcohol which is a low-boiling solvent is added to facilitate the concentration of the ink by virtue of the evaporation of isopropyl alcohol and its penetration into the medium.

More specifically, an ink droplet at the time it has reached the surface of a printing medium is in a state of an unstable solution because surfactant/water systems in the interior and at the interface do not reach an equilibrium condition due to the evaporation of water and the low-boiling solvent by heating, rapid change in surface condition by ejection and impact, and the like. Therefore, it is considered that such an ink droplet has no penetrating power inherent in the ink. From this transient state, the low-boiling solvent evaporates out of the ink to increase the concentration of the surfactant. Such a phenomenon makes the concentration of the surfactant in the ink droplet on the printing medium after impact higher than its critical micelle concentration in the ink to enhance the penetrability of the ink into paper.

In the case of this example, it is considered that there may also be caused, at the same time, a phenomenon that a solvent having low-surface tension and low-viscosity is absorbed in the surface of the printing medium to increase the concentration of the surfactant in the ink on the surface of the printing medium. The above-described phenomenons are used to carry out a greater change in concentration compared with Example 2. An example of the same formulation as in Example 3 except that the low-viscose and absorbable solvent is not added is described as Example 3A. As seen upon 6.5-kHz of driving frequency in Example 3A, in the case making no use of isopropyl alcohol, bleeding slightly tends to occur upon high-frequency driving.

As described above, it is possible to bring about the same effects as in Example 2 by adding the solvent, which is low in boiling point and viscosity and has good affinity for paper, to the ink, evaporating a portion of the solvent on the paper surface and absorbing another portion thereof into the paper to increase the concentration of the surfactant in the ink.

Incidentally, among solvents, there are those acting like the surfactant to increase the viscosities of inks containing them and decrease their surface tensions. These solvents are not preferred because they affect the behavior of the inks in an head. It is hence desirable to add solvents which cause neither increase in viscosity nor decrease in surface tension to a significant extent.

| | Ex. 3 | Comp. Ex. 4 | Ex. 3A |
|---|---|---|---|
| Solvent: Glycerol | 5.0 | 5.0 | 5.0 |
| Low-boiling solvent: Isopropyl alcohol | 5.0 | 5.0 | 0.0 |
| Stabilizer: Urea | 7.5 | 7.5 | 7.5 |
| Surfactant: Ethylene oxide adduct of acetylene glycol, n + m = 10 in Structural Formula [4] | 1.9 | 4.0 | 1.9 |
| Dye: | | | |
| Black: C.I. Food Black 2 | 3.8 | 3.8 | 3.8 |
| Yellow: C.I. Direct yellow 86 | 2.5 | 2.5 | 2.5 |
| Cyan: C.I. Direct Blue 199 | 3.5 | 3.5 | 3.5 |
| Magenta: C.I. Direct Red 227 | 3.5 | 3.5 | 3.5 |
| Water: | Balance | Balance | Balance |

The results of the evaluation as to resistance to bleeding and refilling frequency, which was conducted in the same manner as in Example 2, are shown in Table 2. In order to make the effects of this example more clear, Comparative Example 4 in which the surfactant was added in an amount not less than its critical micelle concentration in the inks was also described as a comparative example.

**Table 2**

| Driving frequency | Item evaluated | Ex. 2 | Comp. Ex. 3 | Ex. 3 | Comp. Ex. 4 | Ex. 3A |
|---|---|---|---|---|---|---|
| 3.0 kHz | Refilling | A | A | A | A | A |
| | Bleeding | A | A | A | A | A |
| 5.5 kHz | Refilling | A | A | A | B | A |
| | Bleeding | A | A | A | A | A |
| 6.0 kHz | Refilling | A | B | A | B | A |
| | Bleeding | A | A | A | A | A |
| 6.5 kHz | Refilling | B | C | B | C | B |
| | Bleeding | A | A | A | A | B |

As apparent from Table 2, the inks of Comparative Example 4 miss refilling upon 5.5-kHz of driving frequency. On the contrary, the inks of Example 3 are good in refilling property even in 6.0 kHz of driving frequency.

### Example 4:

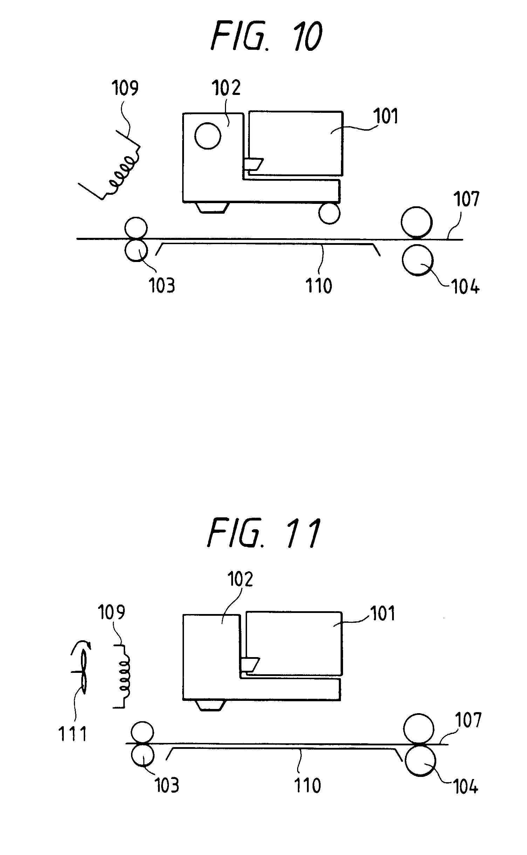

A constitution of Example 4 where the same inks as in Example 2 are used is illustrated in Figs. 10 and 11. By providing a heater 109 or a heater 109 and a fan 111 for sending air to the heater 109 in a printing part, the atmosphere in printing and fixing parts is made a dry atmosphere to facilitate the evaporation of a solvent, water and the like. Such a constitution makes the inclination of a curve in Fig. 8 great to concentrate the inks for a short period of time. Therefore, the time t2 until the absorption of the inks is completed is also shortened. Further, in the case where the low-boiling solvent is added like Example 3, a printing medium is also kept a dry state at the same time. Therefore, the absorption of the solvent into the medium is accelerated, and the evaporation speed is also increased, so that a great effect of more accelerating the fixing speed can be achieved.

### Example 5:

The inks described in Example 1 are good in penetrability and hence great in bleeding rate. Therefore, the amount of such an ink used for covering a certain area may be smaller than the conventional inks. On the contrary, when the ink is ejected in the same amount as the ink small in bleeding rate, unpreferable problems such that stripes are marked at boundary areas, quality of characters printed is lowered and gradation property is deteriorated arise. However, if a small amount of the ink is ejected, the ink in such a small amount comes to cover a great area, so that the concentration of dye per unit area is relatively reduced. Therefore, in the inks according to Example 1, the concentration of the dye contained therein is controlled somewhat higher than the ink small in bleeding rate.

In the case of Example 1 in which inks containing a dye in such a high concentration are used, ejection failure due to viscosity increase tends to occur where a surrounding temperature is low. In such a case, it is generally useful to conduct temperature control of an ejection part or an ejection part including a supply part by means of a heater provided outside the ejection part, a heater in an ejection head, empty heating of an ejection heater used in printing, or the like. However, when temperature control is conducted, the ink making use of a dye in a high concentration such as those in Example 1 causes deposition of the dye in the tip of a nozzle, and sticking and viscosity increase due to evaporation if the temperature controlled is too high, bringing an evil that the break time within the range of possiblity, which has been described in Example 1, is extremely shortened.

Therefore, when the recording apparatus according to Example 1 is used in low-temperature environment of 10°C, printing is feasible without bringing such an evil as described above so long as the ejection part is held within a temperature range of from 15°C to 40°C.

In some cases, recovery operation for preventing the ejection failure due to viscosity increase of the ink in a nozzle in no operation, which is generally called preliminary ejection, may be carried out during printing. Even under low-temperature environment, however, the control of the ejection part within the temperature range of from 20°C to 30°C made it possible to recover the nozzle at substantially the same interval in preliminary ejection as in normal temperatures.

### Example 6:

To the inks according to Example 1, 5 % of thiodiglycol was further added as a solvent for improving ejection property at low temperatures. In this example, printing under low-temperature environment was feasible without holding the temperature of the ejection part like Example 5.

### Example 7:

In ink-jet recording apparatus, multi-scan printing in which plural masks in a supplementary relation with each other are used to scan one printing unit plural times by means of different nozzles, thereby conducting recording, is generally conducted in order to make scattering of ejecting amounts and ejecting directions in individual nozzles inconspicuous. When such printing method is adopted, a shot-in quantity once per unit area can be made small. Therefore, the method is very advantageous to the evaporation of the solvent and water in the case making use of the same inks as those in Example 2 or 3. Such a constitution makes the inclination of a curve in Fig. 8 great as with the case of Example 4 to concentrate the inks for a short period of time. Therefore, the time t2 until the absorption of the inks is completed is also shortened. Accordingly, the fixing is more accelerated compared with the case where the recording of one printing unit is conducted by one scanning, so that a greater effect can be obtained on the prevention of feathering or bleeding.

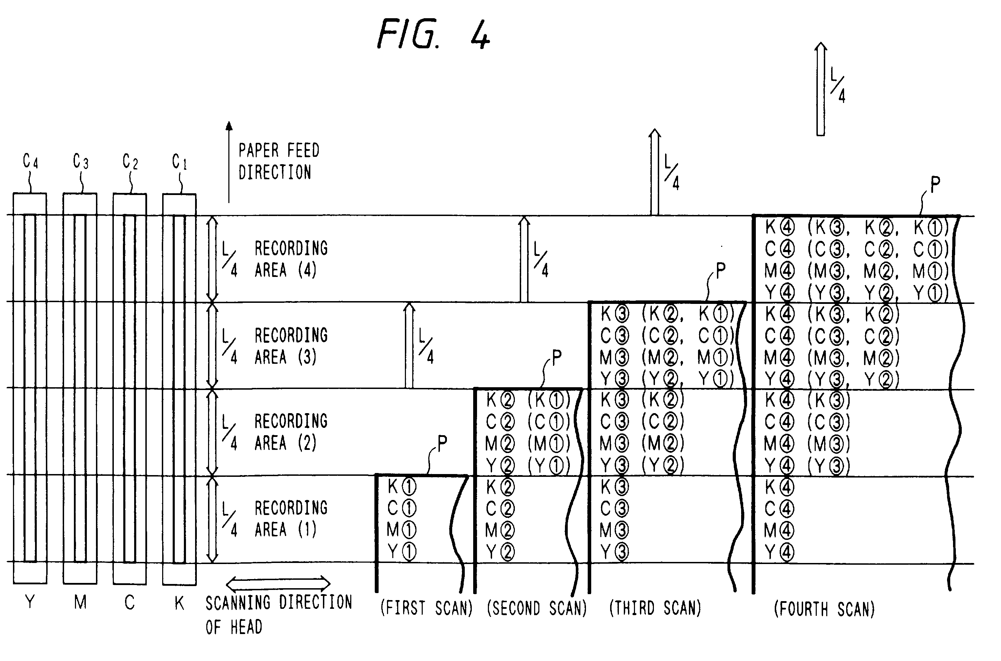

Fig. 4 illustrates a recording method according to Example 7 in the present invention.

The ink-jet recording apparatus and recording head used herein were the same as those used in Example 1.

This method comprises dividing a recording region (L) of the recording head into 4 areas, recording a portion thinned out to 25 % by the first scanning of the recording head, feeding recording paper by L/4 long to print another 25-% portion by the second scanning by another nozzle, feeding the recording paper by L/4 long to print a further 25-% portion by the third scanning and then feeding the recording paper by L/4 long to print a remaining 25-% portion, thereby completing printing.

Properly speaking, an ejection opening line can not be seen. In Fig. 4, however, it is illustrated in perspective from above for the sake of convenient description.

Fig. 3D illustrates an example of how to thin out to 25 % in this embodiment, and indicates impact positions and impact orders by numerals. More specifically, in the first scanning, printing is conducted to positions of ①, and in the second, third and fourth scanning, printing is conducted to positions of ②, ③ and ④, respectively. Printing within a certain region is completed by conducting carriage scanning 4 times.

A detailed description will be made with reference to Fig. 4. Printing is first conducted by nozzles in the recording regions (1) of the respective recording heads by the first scanning. The respective recording heads of K, C, M and Y filled with a black ink, a cyan ink, a magenta ink and a yellow ink, respectively, conduct printing thinned out to 25 %. At this time, portions corresponding to the positions indicated by ① in Fig. 3D are printed. In Fig. 4, they are indicated by K ①, C ①, M ① and Y ①. Then, the paper is fed by L/4 long. In the second scanning, printing is conducted in an area of the recording regions (1) and (2). At this time, the recording heads of K, C, M and Y conduct printing thinned out to 25 % to portions corresponding to the positions indicated by ② in Fig. 3D. In Fig. 4, they are indicated by K ②, C ②, M ② and Y ②. Then, the paper is fed by L/4 long. In the third scanning, printing is successively conducted in an area of the recording regions (1), (2) and (3). At this time, the recording heads of K, C, M and Y conduct printing thinned out to 25 % to portions corresponding to the positions indicated by ③ in Fig. 3D. In Fig. 4, they are indicated by K ③, C ③, M ③ and Y ③. Then, the paper is fed by L/4 long. In the fourth scanning, printing is successively conducted in the whole area of the recording regions (1), (2), (3) and (4). At this time, the recording heads of K, C, M and Y conduct printing thinned out to 25 % to portions corresponding to the positions indicated by ④ in Fig. 3D. In Fig. 4, they are indicated by K ④, C ④, M ④ and Y ④. At this point, the printing of the area of the recording region (4) is completed. Further, the paper is fed by L/4 long to repeat the printing in the above-described manner.

In this embodiment, the jetting amount of ink in one scanning is further lessened compared with Examples 1 and 2. Therefore, ink running is more hard to occur, so that no feathering occurs. In addition, since the black ink is ejected twice the usual amount, it is possible to heighten the print density of a black color. Further, if the amount of ink ejected through each nozzle of the recording head is increased twice, printing is feasible without causing ink running because a shot-in quantity of ink in one scanning is controlled within limits not causing the ink bleeding.

According to this Example, as with Example 2, nozzles for forming dots in the first, second, third and fourth scanning are different from one another. Therefore, density irregularity caused by impact accuracy such as slippage of a recording head, ejected amount of ink, etc. can also be reduced.

At this time, when recording is conducted while the recording head K is being thinned out to 25 % like the other recording heads, the number of times of scanning must be substantially doubled to increase the total shot-in quantity of the black ink to double the usual amount. The recording time must also be substantially doubled.

When recording is conducted under high-humidity environment, a scanning time interval (the time required from the completion of the first scanning to the beginning of the next scanning) must be made longer because the ink is hard to fix. In this case, since waiting time is required, substantial printing time per scanning becomes longer. Therefore, the total recording time becomes considerably long as the number of times of scanning increases. Therefore, when the shot-in quantity of the black ink is intended to double, the recording time is shortened to a considerable extent by changing only the thinning rate of the recording head K to decrease the number of times of scanning by a half compared with the case where the thinning rates of all recording heads are made even. The present invention can thus be said to be considerably useful.

In order to more prevent the ink bleeding and shorten the total recording time, it may be preferable to omit the recording by the fourth scanning and reduce the total ink-shot-in quantity of each of the recording heads C, M and Y to 75 % and the total ink-shot-in quantity of the recording head K to 150 %.

Here, examples of a recording head and a recording method, which exhibit a particularly useful effect, will be described.

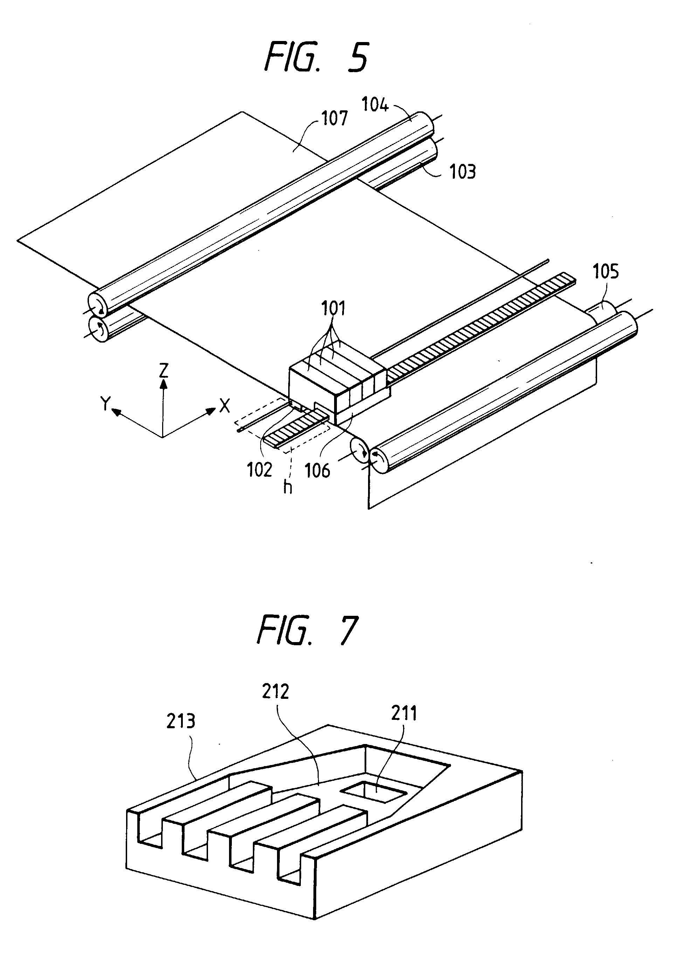

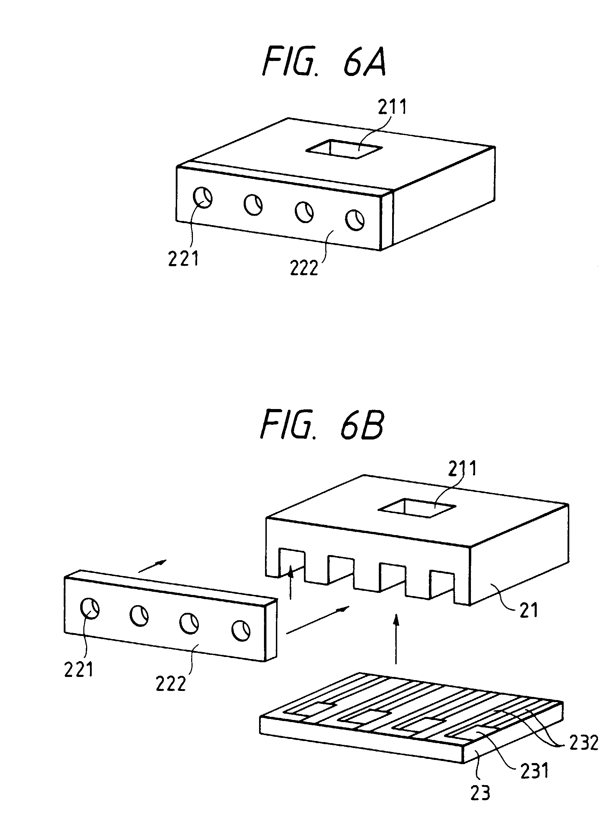

Fig. 5 illustrates a construction of a printer part upon printing by the above-described multi-head on paper. In this drawing, reference numeral 101 indicates ink cartridges. These ink cartridges 101 are composed of ink tanks in which 4 inks of black, cyan, magenta and yellow colors have been respectively charged, and a multi-head 102. An exploded view of the multi-head, ink-ejection openings and an external appearance viewed from a z direction are separately illustrated in Figs. 6A and 6B and Fig. 7. Reference numeral 221 designates ink-ejection openings arranged on the multi-head 102. In these drawings, the ink-ejection openings 221 are arranged in parallel with each other along a Y axis. They may be arranged with a slight inclination, for example, on an X-Y plain. In this case, the head advances along a traveling direction X. On the contrary, the nozzles separately conduct printing while staggering timing. Referring to Fig. 5 again, reference numeral 103 indicates a paper-feed roller which rotates on its axis in a direction indicated by an arrow in Fig. 5 while holding printing paper 107 with an auxiliary roller 104, thereby feeding the printing paper 107 in a y direction at any time. Reference numeral 105 indicates paper-supply rollers which serve to supply the printing paper 107 and fill a role of holding the printing paper 107 like the rollers 103, 104. Reference numeral 106 designates a carriage for supporting 4 ink cartridges and moving them upon printing. The carriage 106 waits at its home position (h) indicated by a broken like in Fig. 5 when printing is not conducted or when the recovery operation of the multi-head, or the like is carried out.

The carriage 106 positioned at the position h (home position) prior to the beginning of printing moves in the x direction when a command to start printing is inputted, thereby conducting printing on the paper by a length D by n multinozzles 221 on the multi-head 102. When the printing of data is completed to one side edge of the paper, the carriage returns to its original home position to conduct printing again in the x direction. If reciprocating printing is conducted, the carriage moves in -x direction to conduct printing. By the time the second printing is started after the completion of the first printing, the paper-feed roller 103 rotates on its axis in the direction of the arrow to feed the paper 107 by a length D in the y direction. In this manner, printing and paper feed by the width D of the multi-head 102 are conducted every scanning of the carriage, and this operation is conducted repeatedly to complete the data printing throughout a paper sheet.

When color printing is carried out by a multi-head as illustrated in Fig. 5, different colors are printed on adjacent picture elements in the same scanning or neighboring scanning. In particular, when different colors are printed on the adjacent picture elements in the same scanning, a time interval since ink droplets of one color have reached the surface of a printing medium until ink droplets of the other color reaches adjacent picture elements is very short. If the fixing time of the inks to the printing medium is longer than the time until the adjacent picture elements are printed, the respective colors are bled with each other to mix the colors, thereby deteriorating image quality. Even if the color printing is conducted not in the same scanning, but in the neighboring scanning, similar bleeding occurs if the fixing speed of the inks to the printing medium is slow, resulting in deteriorated image quality. Therefore, the printer by which different colors are printed on adjacent picture elements is required to quicken the fixing speed. It can thus be understood that the effects owing to the basic features of the present invention can be exhibited synergistically.

When the amount of a surfactant in an ink is made lower than its critical micelle concentration, water and the solvent are evaporated a little by the time its droplets reaches the recording medium from the head or next ink droplets are impacted on adjacent picture elements after the former ink droplets have reached the recording medium, and only the solvent is selectively absorbed in the recording medium, thereby increasing the concentration of the surfactant in the ink on the medium to the critical micelle concentration or higher, the penetrability of the ink can be increased, and occurrence of bleeding or feathering can be prevented. In this case, supposing the critical micelle concentration of the surfactant is 100 %, the concentration of the surfactant in the ink is preferably controlled to from 80 % to less than 100 %, more preferably from 90 % to 99 % of the critical micelle concentration.

The present invention has been developed for the first time by renovating the conventional technical reading, analyzing structural changes of flying droplets of an ink containing a surfactant after ejecting through an ink-jet recording head, and making allowance for the correlation among the change of state of the ink in the ink-jet recording head, the production of minute ink droplets other than main ink droplets, which are caused by separation of the flying ink droplets and called satellites and microdots, and the behavior of the ink toward a recording medium. By supplying an ink-jet recording head with a water-based ink containing the surfactant in a predetermined amount lower than the critical micelle concentration of the surfactant in the water-based ink (c.m.c in ink), but higher than the critical micelle concentration of the surfactant in purified water (c.m.c. in purified water), the ejection state of ink droplets ejected can be stabilized to reliably prevent feathering or bleeding on a recording medium, so that the improvement in print quality can be surely achieved owing to the stabilization of the shape of a single dot, and the well-balanced relation between ejection recovery property and ejection property at high frequency can be fully satisfied.

By changing the concentration of the surfactant in the ink on the recording medium to its critical micelle concentration (c.m.c in ink) or higher in addition to the above-described features, the effects brought about by the principal features are satisfied, and on the recording medium, the function of the surfactant can be more fulled up and the surface tension of the ink becomes lower, so that a still marked effect is exhibited on the prevention of feathering, the penetration of the ink is hard to be affected by media, and even printing can be conducted even on an uneven medium.

## Claims

1. An ink-jet recording method, which comprises supplying an ink-jet recording head with a water-based ink containing a surfactant in a predetermined amount lower than the critical micelle concentration of the surfactant in the water-based ink (c.m.c in ink), but higher than the critical micelle concentration of the surfactant in purified water (c.m.c. in purified water), thereby conducting recording with the ink on a recording medium.

2. An ink-jet recording method according to claim 1 wherein the predetermined amount of surfactant is lower than and near to the critical micelle concentration of the surfactant in the water-based ink (c.m.c. in ink).

3. An ink-jet recording method according to claim 2 wherein the concentration of the surfactant in the ink on a recording medium is adjusted so as to become not less than the critical micelle concentration of the surfactant in the ink (c.m.c. in ink).

4. The ink-jet recording method according to any one of claims 1 to 3, wherein the method is a color recording method in which recording can be conducted with plural inks of different colors in order on a recording medium, and all the inks used contain the surfactant in the predetermined amount satisfying the above range.

5. An ink-jet recording method according to any one of claims 1 to 4, wherein the water-based ink is used under conditions so it satisfies a surface tension exceeding 30 dyne/cm as used.

6. An ink-jet recording method according to any one of claims 1 to 5 wherein the surfactant has the structural formula [1] to [4]:
Structural Formula [1]: R-O-(CH₂CH₂O)ₙ-H
wherein R means an alkyl group, and n stands for an integer, 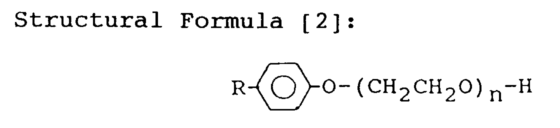 wherein R means an alkyl group, and n stands for an integer, 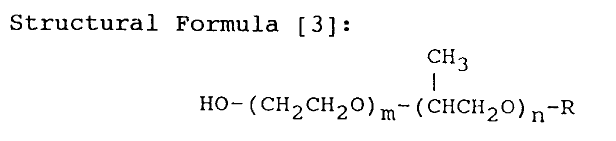 wherein R means hydrogen or an alkyl group, and m and n stand individually for an integer, and 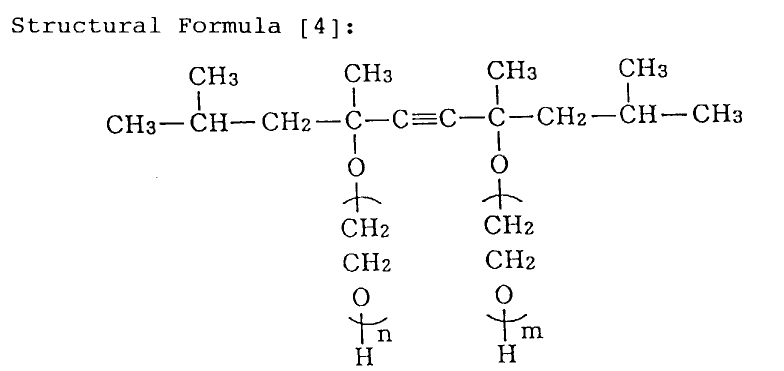 wherein m and n stand individually for an integer.

7. An ink-jet recording method according to claim 6 wherein the surfactant is an ethylene oxide adduct of acetylene glycol represented by structural formula [4].

8. An ink-jet recording method according to claim 7 wherein m and n satisfy the range 6 < m + n < 14.

9. An ink-jet printing method making use of an ink-jet recording head temperature-controlled under temperature setting conditions of T°C, which comprises supplying an ink-jet recording head with a water-based ink containing a surfactant in a predetermined amount lower than the critical micelle concentration of the surfactant in the water-based ink (c.m.c. in ink) on a relational curve between the surface tension and concentration of the surfactant in the water-based ink under the temperature setting conditions of T°C, but higher than the critical micelle concentration of the surfactant in purified water (c.m.c. in purified water) on a relational curve between the surface tension and concentration of the surfactant in the purified water under the temperature setting conditions T°C to conduct printing.

10. The printing method according to claim 9, wherein the temperature setting conditions of T°C is within a range of from not lower than 15°C to not higher than 40°C.

11. The printing method according to claim 9 or 10, wherein the water-based ink has a surface tension exceeding 30 dyne/cm under the temperature setting conditions of T°C.

12. The printing method according to any one of claims 9 to 11, wherein the predetermined amount of the surfactant contained in the water-based ink is within a range of [the critical micelle concentration (c.m.c. in ink) + the critical micelle concentration (c.m.c. in purified water)]/2 or lower.

13. The printing method according to any one of claims 9 to 12, wherein the ink-jet recording head is a scanning type head equipped with a heating mechanism for generating heat by receiving a drive signal to eject the ink by bubbles formed, and serving to print plural inks of different colors at the same time in directions different from a scanning direction with the above-described conditions satisfied.

14. The printing method according to any one of claims 9 to 13, wherein the water-based ink contains any one of compound represented by the following structural formulae [1] to [4]:
Structural Formula [1]: R-O-(CH₂CH₂O)ₙ-H
wherein R means an alkyl group, and n stands for an integer, 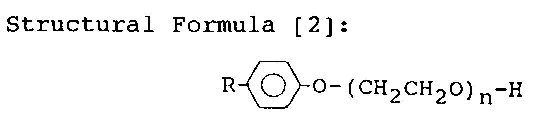 wherein R means an alkyl group, and n stands for an integer, 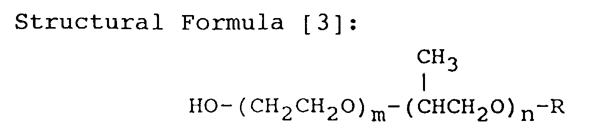 wherein R means hydrogen or an alkyl group, and m and n stand individually for an integer, and 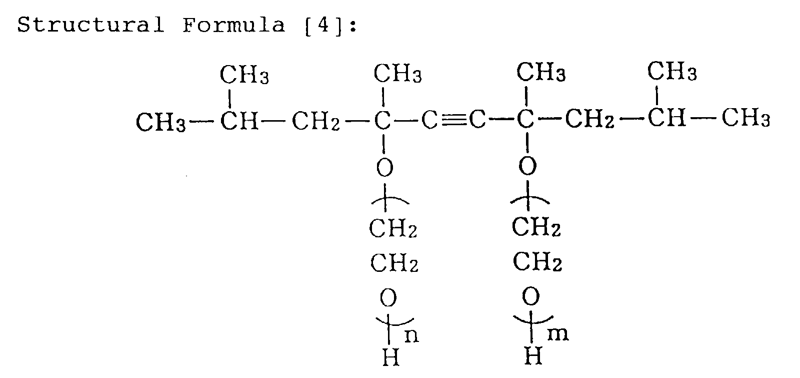 wherein m and n stand individually for an integer.

15. The printing method according to claim 14, which comprises using a water-based ink containing an ethylene oxide adduct of acetylene glycol, which is represented by the structural formula [4] set forth in claim 14.

16. The printing method according to claim 14 or 15, which comprises using an ink containing a compound of the structural formula [4] in which m and n satisfy the range of 6 < m + n < 14.

17. An ink-jet recording apparatus, comprising an ink-jet recording head charged with a water-based ink containing a surfactant in a predetermined amount lower than and near to the critical micelle concentration of the surfactant in the water-based ink (c.m.c. in ink), but higher than the critical micelle concentration of the surfactant in purified water (c.m.c. in purified water) and an accelerating means for adjusting the concentration of the surfactant in the ink on a recording medium so as to become not less than the critical micelle concentration of the surfactant in the ink (c.m.c. in ink), said apparatus conducting recording with the water-based ink on the recording medium.

18. The ink-jet recording apparatus according to claim 17, wherein the accelerating means includes a means for fixing under heat the water-based ink applied on the recording medium before any adjacent ink comes into contact with the water-based ink.

19. A water-based ink for an ink-jet recording method containing a surfactant in a predetermined amount lower than the critical micelle concentration of the surfactant in the water-based ink (c.m.c. in ink), but higher than the critical micelle concentration of the surfactant in purified water (c.m.c. in purified water).

20. A water-based ink according to claim 19 wherein the predetermined amount of surfactant is lower than and near to the critical micelle concentration of the surfactant in the water-based ink (c.m.c. in ink).

21. A water-based ink according to claim 19 wherein the predetermined amount of the surfactant contained in the water-based ink is within a range of [the critical micelle concentration (c.m.c. in ink) + the critical micelle concentration (c.m.c. in purified water)]/2 or lower.

22. A water-based ink according to any one of claims 19 to 21 wherein the surfactant has the structural formula [1] to [4]:
Structural Formula [1]: R-O-(CH₂CH₂O)ₙ-H
wherein R means an alkyl group, and n stands for an integer, 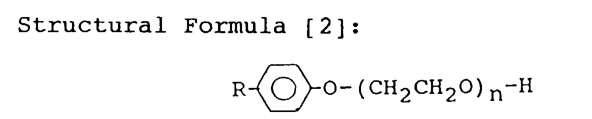 wherein R means an alkyl group, and n stands for an integer, 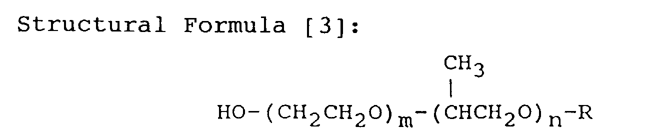 wherein R means hydrogen or an alkyl group, and m and n stand individually for an integer, and 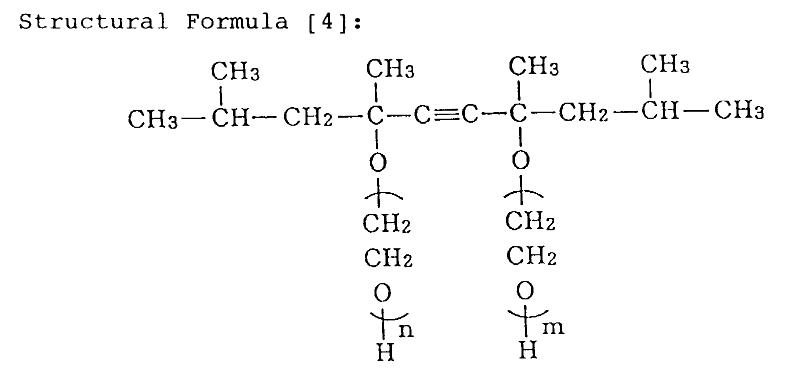 wherein m and n stand individually for an integer.

23. A water-based ink according to claim 22 wherein the surfactant is an ethylene oxide adduct of acetylene glycol represented by structural formula [4].

24. A water-based ink according to claim 23 wherein m and n satisfy the range 6 < m + n < 14.

## Patentansprüche

1. Tintenstrahlaufzeichnungsverfahren, umfassend, daß ein Tintenstrahlaufzeichnungskopf mit einer Tinte auf Wasserbasis versorgt wird, die ein oberflächenaktives Mittel in einer festgelegten Menge enthält, die kleiner ist als die kritische Mizellenkonzentration des oberflächenaktiven Mittels in der Tinte auf Wasserbasis (c.m.c. in Tinte), aber größer ist als die kritische Mizellenkonzentration des oberflächenaktiven Mittels in gereinigtem Wasser (c.m.c. in gereinigten Wasser), wodurch die Aufzeichnung mit der Tinte auf einem Aufzeichnungsmaterial durchgeführt wird.

2. Tintenstrahlaufzeichnungsverfahren nach Anspruch 1, worin die festgelegte Menge des oberflächenaktiven Mittels kleiner ist als die kritische Mizellenkonzentration des oberflächenaktiven Mittels in der Tinte auf Wasserbasis (c.m.c. in Tinte) oder in der Nähe davon liegt.

3. Tintenstrahlaufzeichnungsverfahren nach Anspruch 2, worin die Konzentration des oberflächenaktiven Mittels in der Tinte auf dem Aufzeichnungsmaterial so eingestellt wird, daß sie nicht geringer wird als die kritische Mizellenkonze n-tration des oberflächenaktiven Mittels in der Tinte (c.m.c. in Tinte).

4. Tintenstrahlaufzeichnungsverfahren nach einem der Ansprüche 1 bis 3, worin das Verfahren ein Farbaufzeichnungsverfahren darstellt, bei dem die Aufzeichnung durchgeführt werden kann mit einer Vielzahl von Tinten mit verschiedenen Farben nacheinander auf einem Aufzeichnungsmaterial, und alle Tinten, die verwendet werden, das oberflächenaktive Mittel in der festgelegten Menge enthalten, die im vorstehend genannten Bereich liegt.

5. Tintenstrahlaufzeichnungsverfahren nach einem der Ansprüche 1 bis 4, worin die Tinte auf Wasserbasis unter Bedingungen verwendet wird, so daß sie eine Oberflächenspannung bereitstellt, die 30 dyn/cm überschreitet, wenn sie verwendet wird.

6. Tintenstrahlaufzeichnungsverfahren nach einem der Ansprüche 1 bis 4, worin das oberflächenaktive Mittel die Strukturformeln [1] bis [4] aufweist:
Strukturformel [1] R-O-(CH₂CH₂O)ₙ-H
worin R eine Alkylgruppe bedeutet und n eine ganze Zahl bedeutet, 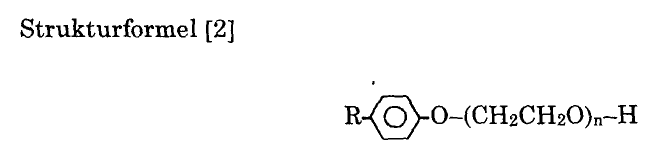 worin R eine Alkylgruppe bedeutet und n eine ganze Zahl bedeutet, 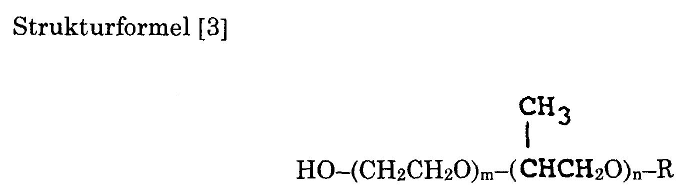 worin R ein Wasserstoffatom oder eine Alkylgruppe bedeutet und m und n unabhängig voneinander eine ganze Zahl bedeuten, und 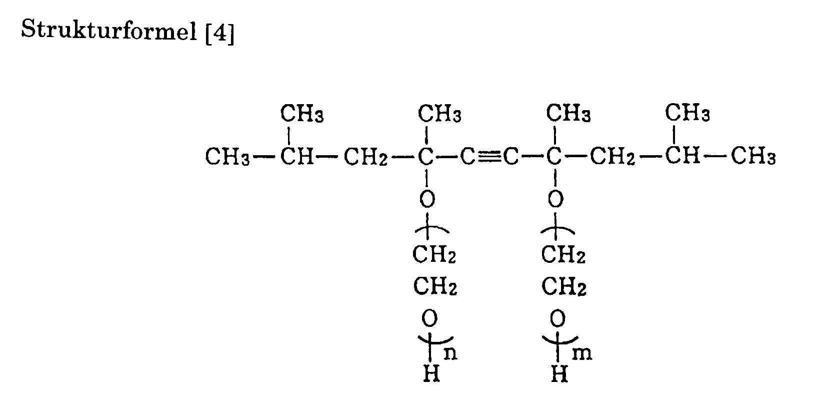 worin m und n unabhängig voneinander eine ganze Zahl bedeuten.

7. Tintenstrahlaufzeichnungsverfahren nach Anspruch 6, worin das oberflächenaktive Mittel ein Ethylenoxidadukt von Acetylenglycol ist, das durch die Strukturformel [4] dargestellt ist.

8. Tintenstrahlaufzeichnungsverfahren nach Anspruch 7, worin m und n den Bereich 6 < m+n < 14 befriedigen.

9. Tintenstrahlaufzeichnungsverfahren, das einen Tintenstrahlaufzeichnungskopf einsetzt, der temperaturgesteuert wird unter der Bedingung, daß die Temperatur auf T°C eingestellt ist, umfassend, daß ein Tintenstrahlaufzeichnungskopf mit einer Tinte auf Wasserbasis versorgt wird, die ein oberflächenaktives Mittel in einer festgelegten Menge enthält, die kleiner ist als die kritische M izellenkonzentration des oberflächenaktiven Mittels in der Tinte auf Wasserbasis (c.m.c. in Tinte) auf einer Kurve einer Beziehung zwischen der Oberflächenspannung und der Konzentration des oberflächenaktiven Mittels in der Tinte auf Wasserbasis unter der Bedingung, daß die Temperatur auf T°C eingestellt ist, aber größer ist als die kritische Mizellenkonzentration des oberflächenaktiven Mittels in gereinigtem Wasser (c.m.c. in gereinigten Wasser) auf einer Kurve einer Beziehung zwischen der Oberflächenspannung und der Konzentration des oberflächenaktiven Mittels in gereinigtem Wasser unter der Bedingung, daß die Temperatur auf T°C eingestellt ist, um das Drucken durchzuführen.

10. Druckverfahren nach Anspruch 9, worin die Bedingung, daß die Temperatur auf T°C eingestellt ist, in einem Bereich von nicht weniger als 15 °C und nicht mehr als 40°C liegt.

11. Druckverfahren nach Anspruch 9 oder Anspruch 10, worin die Tinte auf Wasserbasis eine Oberflächenspannung aufweist, die 30 dyn/cm übersteigt unter der Bedingung, daß die Temperatur auf T°C eingestellt ist.

12. Druckverfahren nach einem der Ansprüche 9 bis 11, worin die festgelegte Menge des oberflächenaktiven Mittels, das in der Tinte auf Wasserbasis enthalten ist, in einem Bereich von [kritische Mizellenkonzentration (c.m.c. in Tinte) + kritische Mizellenkonzentration (c.m.c. in gereinigtem Wasser)] / 2 oder weniger liegt.

13. Druckverfahren nach einem der Ansprüche 9 bis 12, worin der Tintenstrahlaufzeichnungskopf ein Kopf vom Abtasttyp ist, der mit einem Heizmechanismus für die Erzeugung von Hitze durch Empfang eines Ansteuersignals ausgerüstet ist, um die Tinte durch Bläschen, die gebildet werden, auszustoßen, und der dazu dient, eine Vielzahl von Tinten verschiedenen Farben gleichzeitig in Richtungen zu drucken, die sich von der Abtastrichtung unterscheiden, wobei die vorstehend genannten Bedingungen erfüllt sind.

14. Druckverfahren nach einem der Ansprüche 9 bis 13, worin die Tinte auf Wasserbasis eine beliebige der Verbindungen enthält, die durch die Strukturformeln [1] bis [4] dargestellt sind:
Strukturformel [1] R-O-(CH₂CH₂O)ₙ-H
worin R eine Alkylgruppe bedeutet und n eine ganze Zahl bedeutet, 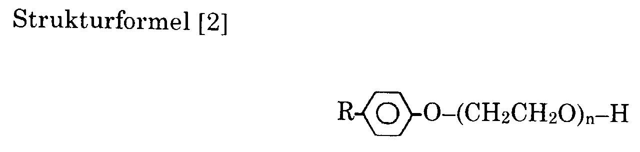 worin R eine Alkylgruppe bedeutet und n eine ganze Zahl bedeutet, 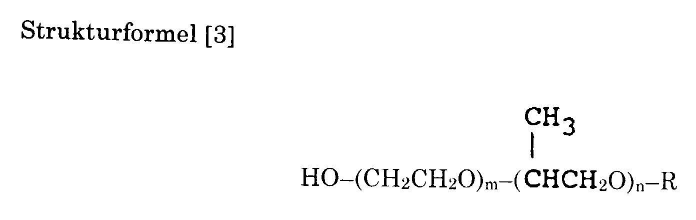 worin R ein Wasserstoffatom oder eine Alkylgruppe bedeutet und m und n unabhängig voneinander eine ganze Zahl bedeuten, und 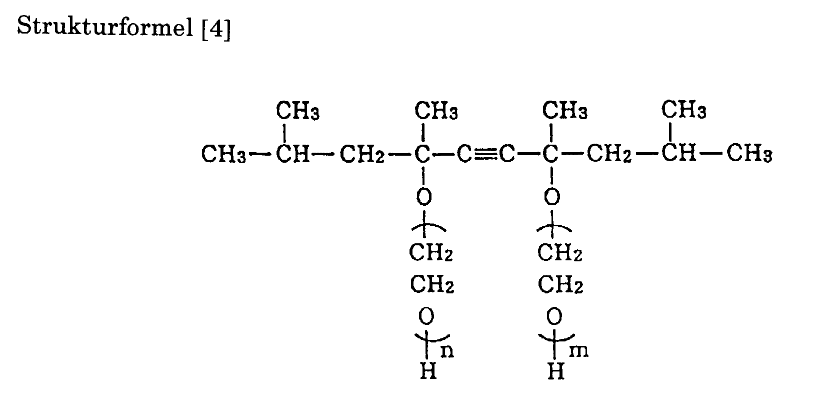 worin m und n unabhängig voneinander eine ganze Zahl bedeuten.

15. Druckverfahren nach Anspruch 14, umfassend, daß eine Tinte auf Wasserbasis verwendet wird, die ein Ethylenoxidadukt von Acetylenglycol enthält, das durch die Strukturformel [4] dargestellt ist, die in Anspruch 14 angegeben ist.

16. Tintenstrahlaufzeichnungsverfahren nach Anspruch 14 oder Anspruch 15, umfassend, daß eine Tinte verwendet wird, die eine Verbindung der Strukturformel [4] enthält, worin m und n den Bereich 6 < m+n < 14 befriedigen.

17. Tintenstrahlaufzeichnungsvorrichtung, umfassend einen Tintenstrahlaufzeichnungskopf, der mit einer Tinte auf Wasserbasis beladen ist, die ein oberflächenaktives Mittel in einer festgelegten Menge enthält, die kleiner ist als die kritische Mizellenkonzentration des oberflächenaktiven Mittels in der Tinte auf Wasserbasis (c.m.c. in Tinte) und in der Nähe davon liegt, aber größer ist als die kritische Mizellenkonzentration des oberflächenaktiven Mittels in gereinigtem Wasser (c.m.c. in gereinigten Wasser), und eine Beschleunigungsvorrichtung zum Einstellen der Konzentration des oberflächenaktiven Mittels in der Tinte auf einem Aufzeichnungsmaterial, so daß sie nicht kleiner als die kritische Mizelle n-konzentration des oberflächenaktiven Mittels in der Tinte (c.m.c. in Tinte) wird, wobei die Vorrichtung die Aufzeichnung mit der Tinte auf Wasserbasis auf dem Aufzeichnungsmaterial durchführt.

18. Tintenstrahlaufzeichnungsvorrichtung nach Anspruch 17, worin die Beschleunigungseinrichtung einer Einrichtung zum Fixieren der Tinte auf Wasserbasis, die auf das Aufzeichnungsmaterial aufgebracht wurde, unter Hitze, bevor irgendeine benachbarte Tinte in Kontakt mit der Tinte auf Wasserbasis kommt, einschließt.

19. Tinte auf Wasserbasis für ein Tintenstrahlaufzeichnungsverfahren, die ein oberflächenaktives Mittel in einer festgelegten Menge enthält, die kleiner ist als die kritische Mizellenkonzentration des oberflächenaktiven Mittels in der Tinte auf Wasserbasis (c.m.c. in Tinte), aber größer ist als die kritische Mizellenkonzentration des oberflächenaktiven Mittels in gereinigtem Wasser (c.m.c. in gereinigten Wasser).

20. Tinte auf Wasserbasis nach Anspruch 19, worin die festgelegte Menge des oberflächenaktiven Mittels kleiner ist als die kritische Mizellenkonzentration des oberflächenaktiven Mittels in der Tinte auf Wasserbasis (c.m.c. in Tinte) oder in der Nähe davon liegt.

21. Tinte auf Wasserbasis nach Anspruch 19, worin die festgelegte Menge des oberflächenaktiven Mittels, das in der Tinte auf Wasserbasis enthalten ist, in einem Bereich von [kritische Mizellenkonzentration (c.m.c. in Tinte) + kritische Mizellenkonzentration (c.m.c. in gereinigtem Wasser)] / 2 oder weniger liegt.

22. Tinte auf Wasserbasis nach einem der Ansprüche 19 bis 21, worin das oberflächenaktive Mittel die Strukturformeln [1] bis [4] aufweist:
Strukturformel [1] R-O-(CH₂CH₂O)ₙ-H
worin R eine Alkylgruppe bedeutet und n eine ganze Zahl bedeutet, 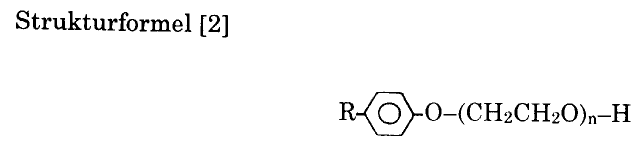 worin R eine Alkylgruppe bedeutet und n eine ganze Zahl bedeutet, 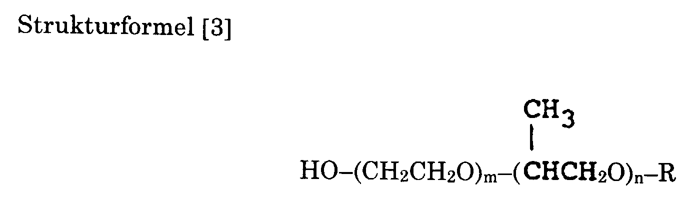 worin R ein Wasserstoffatom oder eine Alkylgruppe bedeutet und m und n unabhängig voneinander eine ganze Zahl bedeuten, und 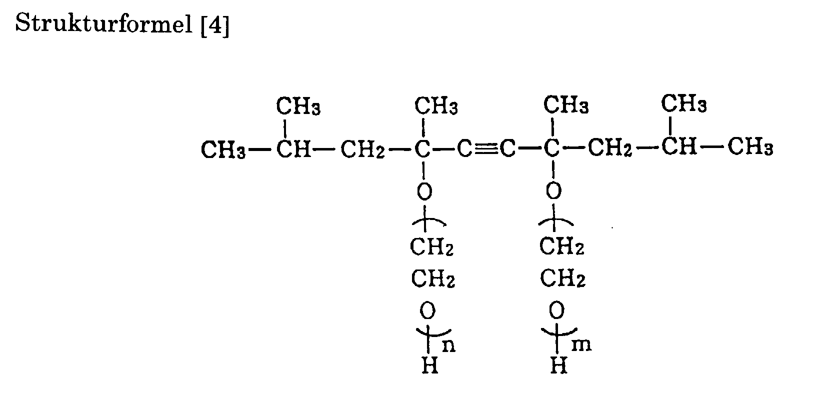 worin m und n unabhängig voneinander eine ganze Zahl bedeuten.

23. Tinte auf Wasserbasis nach Anspruch 22, worin das oberflächenaktive Mittel ein Ethylenoxidadukt von Acetylenglycol ist, das durch die Strukturformel [4] dargestellt ist.

24. Tinte auf Wasserbasis nach Anspruch 23, worin m und n den Bereich 6 < m+n < 14 befriedigen.

## Revendications

1. Procédé d'enregistrement par jets d'encre, qui comprend l'alimentation d'une tête d'enregistrement par jets d'encre avec une encre aqueuse contenant un surfactant en une quantité prédéterminée inférieure à la concentration de formation de micelles critique du surfactant dans l'encre aqueuse (c.m.c. dans l'encre), mais supérieure à la concentration de formation de micelles critique du surfactant dans l'eau purifiée (c.m.c. dans l'eau purifiée), ce qui permet d'effectuer l'enregistrement avec l'encre sur un support d'enregistrement.

2. Procédé d'enregistrement par jets d'encre suivant la revendication 1, dans lequel la quantité prédéterminée de surfactant est inférieure à, et proche de, la concentration de formation de micelles critique du surfactant dans l'encre aqueuse (c.m.c. dans l'encre).

3. Procédé d'enregistrement par jets d'encre suivant la revendication 2, dans lequel la concentration du surfactant dans l'encre sur un support d'enregistrement est ajustée de manière à devenir non inférieure à la concentration de formation de micelles critique du surfactant dans l'encre (c.m.c. dans l'encre).

4. Procédé d'enregistrement par jets d'encre suivant l'une quelconque des revendications 1 à 3, qui est un procédé d'enregistrement en couleur dans lequel un enregistrement peut être effectué avec plusieurs encres de couleurs différentes dans l'ordre sur un support d'enregistrement, et toutes les encres utilisées contiennent le surfactant en la quantité prédéterminée comprise dans l'intervalle précité.

5. Procédé d'enregistrement par jets d'encre suivant l'une quelconque des revendications 1 à 4, dans lequel l'encre aqueuse est utilisée dans des conditions permettant d'obtenir une tension superficielle excédant 30 dynes/cm lors de l'utilisation.

6. Procédé d'enregistrement par jets d'encre suivant l'une quelconque des revendications 1 à 5, dans lequel le surfactant répond à une des formules structurales [1] à [4] :
Formule structurale [1] : R-O-(CH₂CH₂O)ₙ-H
dans laquelle R représente un groupe alkyle et n représente un nombre entier, 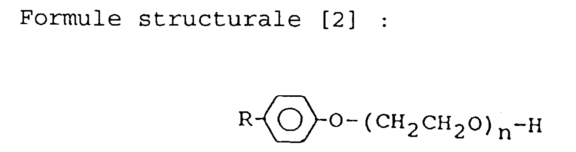 dans laquelle R représente un groupe alkyle en n représente un nombre entier, 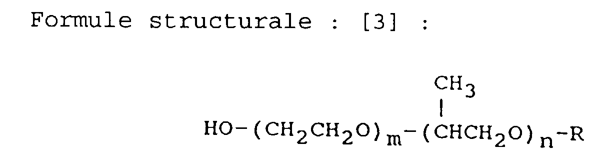 dans laquelle R représente l'hydrogène ou un groupe alkyle et m et n représentent chacun un nombre entier, et 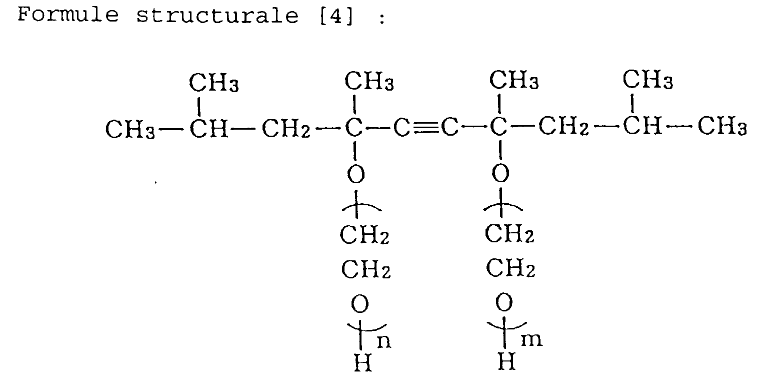 dans laquelle m et n représentent chacun un nombre entier.

7. Procédé d'enregistrement par jets d'encre suivant la revendication 6, dans lequel le surfactant consiste en un produit d'addition d'oxyde d'éthylène sur l'acétylèneglycol, représenté par la formule structurale [4].

8. Procédé d'enregistrement par jets d'encre suivant la revendication 7, dans lequel m et n satisfont la relation 6 < m + n < 14.

9. Procédé d'impression par jets d'encre utilisant une tête d'enregistrement par jets d'encre à température régulée dans des conditions d'ajustement de température T°C, qui comprend l'alimentation d'une tête d'enregistrement par jets d'encre avec une encre aqueuse contenant un surfactant en une quantité prédéterminée inférieure à la concentration de formation de micelles critique du surfactant dans l'encre aqueuse (c.m.c. dans l'encre) sur une courbe de relation entre la tension superficielle et la concentration du surfactant dans l'encre aqueuse dans des conditions d'ajustement de température T°C, mais supérieure à la concentration de formation de micelles critique du surfactant dans l'eau purifiée (c.m.c. dans l'eau purifiée) sur une courbe de relation entre la tension superficielle et la concentration du surfactant dans l'eau purifiée dans les conditions d'ajustement de température T°C pour effectuer l'impression.

10. Procédé d'impression suivant la revendication 9, dans lequel les conditions d'ajustement de température T°C correspondent à un intervalle allant d'une valeur non inférieure à 15°C à une valeur non supérieure à 40°C.

11. Procédé d'impression suivant la revendication 9 ou 10, dans lequel l'encre aqueuse a une tension superficielle excédant 30 dynes/cm dans les conditions d'ajustement de température T°C.

12. Procédé d'impression suivant l'une quelconque des revendications 9 à 11, dans lequel la quantité prédéterminée du surfactant présent dans l'encre aqueuse est comprise dans l'intervalle des valeurs égales ou inférieures à [concentration de formation de micelles critque (c.m.c. dans l'encre) + concentration de formation de micelles critique (c.m.c. dans l'eau purifiée)]/2.

13. Procédé d'impression suivant l'une quelconque des revendications 9 à 12, dans lequel la tête d'enregistrement par jets d'encre est une tête à fonctionnement par balayage équipée d'un mécanisme de chauffage pour engendrer de la chaleur en recevant un signal de commande pour l'éjection de l'encre sous forme des bulles formées, et servant à imprimer plusieurs encres de couleurs différentes en même temps dans des directions différentes d'une direction de balayage tout en satisfaisant aux conditions décrites ci-dessus.

14. Procédé d'impression suivant l'une quelconque des revendications 9 à 13, dans lequel l'encre aqueuse contient l'un quelconque des composés représentés par les formules structurales [1] à [4] suivantes :
Formule structurale [1] : R-O-(CH₂CH₂O)ₙ-H
dans laquelle R représente un groupe alkyle et n représente un nombre entier, 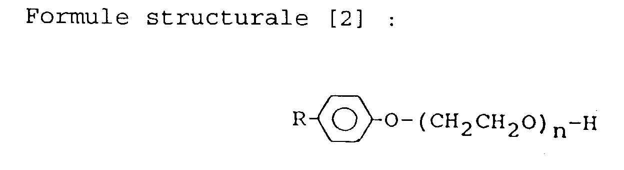 dans laquelle R représente un groupe alkyle et n représente un nombre entier, 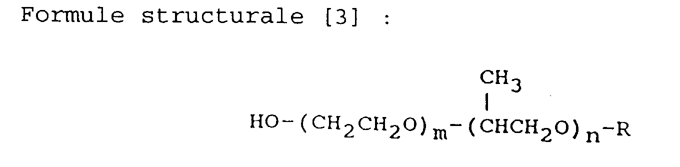 dans laquelle R représente l'hydrogène ou un groupe alkyle et m et n repésentent chacun un nombre entier, et 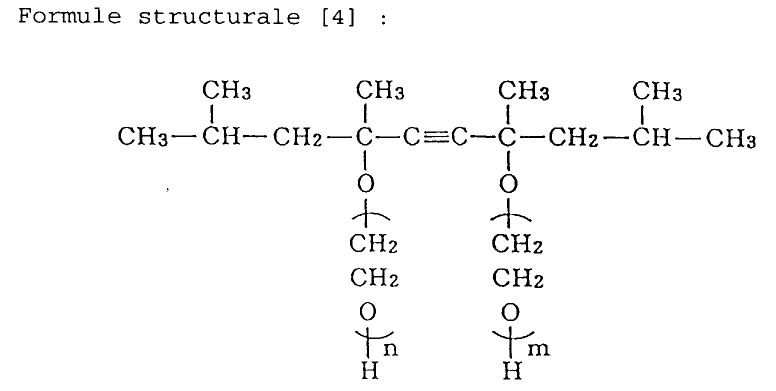 dans laquelle m et n représentent chacun un nombre entier.

15. Procédé d'impression suivant la revendication 14, qui comprend l'utilisation d'une encre aqueuse contenant un produit d'addition d'oxyde d'éthylène sur l'acétylèneglycol, qui est représenté par la formule structurale [4] indiquée dans la revendication 14.

16. Procédé d'impression suivant la revendication 14 ou 15, qui comprend l'utilisation d'une encre contenant un composé de formule structurale [4] dans laquelle m et n satisfont à la relation 6 < m + n < 14.

17. Appareil d'enregistrement par jets d'encre, comprenant une tête d'enregistrement par jets d'encre renfermant une encre aqueuse contenant un surfactant en une quantité prédéterminée inférieure à et proche de la concentration de formation de micelles critique du surfactant dans l'encre aqueuse (c.m.c. dans l'encre), mais supérieure à la concentration de formation de micelles critique du surfactant dans de l'eau purifiée (c.m.c. dans l'eau purifiée) et un moyen d'accélération pour l'ajustement de la concentration du surfactant dans l'encre sur un support d'enregistrement de telle sorte que cette concentration devienne non inférieure à la concentration de formation de micelles critique du surfactant dans l'encre (c.m.c. dans l'encre), ledit appareil effectuant l'enregistrement avec l'encre aqueuse sur le support d'enregistrement.

18. Appareil d'enregistrement par jets d'encre suivant la revendication 17, dans lequel le moyen d'accélération comprend un moyen de fixage à chaud de l'encre aqueuse appliquée sur le support d'enregistrement avant qu'une quelconque quantité d'encre adjacente ne vienne en contact avec l'encre aqueuse.

19. Encre aqueuse pour un procédé d'enregistrement par jets d'encre, contenant un surfactant en une quantité prédéterminée inférieure à la concentration de formation de micelles critique du surfactant dans l'encre aqueuse (c.m.c. dans l'encre), mais supérieure à la concentration de formation de micelles critique du surfactant dans l'eau purifiée (c.m.c. dans l'eau purifiée).

20. Encre aqueuse suivant la revendication 19, dans laquelle la quantité prédéterminée de surfactant est inférieure à et proche de, la concentration de formation de micelles critique du surfactant dans l'encre aqueuse (c.m.c. dans l'encre).

21. Encre aqueuse suivant la revendication 19, dans laquelle la quantité prédéterminée du surfactant présent dans l'encre aqueuse est comprise dans l'intervalle des valeurs égales ou inférieures à [la concentration de formation de micelles critique (c.m.c. dans l'encre) + concentration de formation de micelles critique (c.m.c. dans l'eau purifiée)]/2.

22. Encre aqueuse suivant l'une quelconque des revendications 19 à 21, dans laquelle le surfactant répond à une des formules structurales [1] à [4] :
Formule structurale [1] : R-O-(CH₂CH₂O)ₙ-H
dans laquelle R représente un groupe alkyle et n représente un nombre entier, 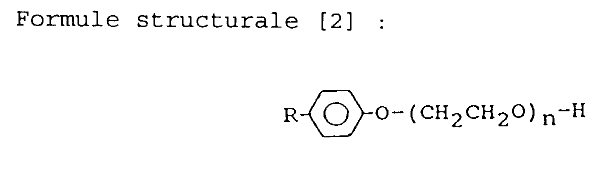 dans laquelle R représente un groupe alkyle en n représente un nombre entier, 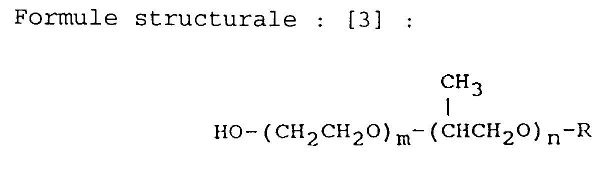 dans laquelle R représente l'hydrogène ou un groupe alkyle et m et n représentent chacun un nombre entier, et 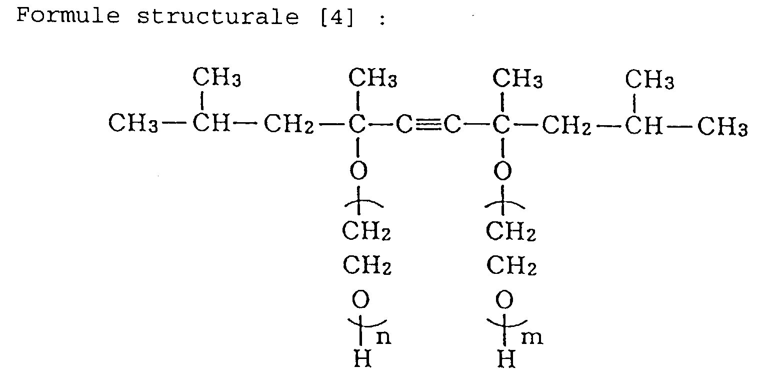 dans laquelle m et n représentent chacun un nombre entier.

23. Encre aqueuse suivant la revendication 22, dans laquelle le surfactant est un produit d'addition d'oxyde d'éthylène sur l'acétylèneglycol, représenté par la formule structurale [4] .

24. Encre aqueuse suivant la revendication 23, dans laquelle m et n satisfont à la relation 6 < m + n < 14.
